# EUROPÄISCHE PATENTANMELDUNG

(11) **EP 4 596 125 A1**
(43) Veröffentlichungstag der Anmeldung: **06.08.2025**
(21) Anmeldenummer: 24155441.9
(22) Anmeldetag: 02.02.2024
(51) Int. Cl.: B08B 5/02, G01N 21/15, G02B 27/00

(54) **FREIBLASEINRICHTUNG, SYSTEM UND VERFAHREN ZUM BETRIEB DER FREIBLASEINRICHTUNG**

(71) Anmelder: Primetals Technologies Austria GmbH, 4031 Linz (AT)
(72) Erfinder: Hlobil, Helmut, 4491 Niederneukirchen (AT); Eder, Daniel Philipp, 4040 Linz (AT); Mayrhofer, Franz Christian, 4661 Roitham am Traunfall (AT)
(74) Vertreter: Metals@Linz

(57) **Zusammenfassung**

Die Erfindung betrifft eine Freiblaseinrichtung (20), ein System (10) sowie ein Verfahren zum Betrieb der Freiblaseinrichtung (20), wobei die Freiblaseinrichtung (20) wenigstens einen Strömungsverteiler (90), eine Gehäuseöffnung (95) und eine Ausblasöffnung (100) aufweist, wobei sich die Freiblaseinrichtung (20) entlang einer Achse (55) zwischen der Gehäuseöffnung (95) und der zur Gehäuseöffnung (95) gegenüberliegend angeordneten Ausblasöffnung (100) erstreckt, wobei zwischen der Gehäuseöffnung (95) und der Ausblasöffnung (100) die Freiblaseinrichtung (20) einen Schutzraum (135) umschließt, wobei an der Gehäuseöffnung (95) eine Sensoreinrichtung (25) anordenbar ist und die Ausblasöffnung (100) der staubbeladenen Umgebung (60) zuwendbar ist, wobei der Strömungsverteiler (90) wenigstens eine erste Düsenanordnung (140) mit wenigstens einer ersten Durchtrittsöffnung (155), eine erste Innenwand (105) und eine erste Kanalanordnung (170) mit wenigstens einem ersten Verbindungskanal (185) aufweist, wobei sich die erste Innenwand (105) von der Gehäuseöffnung (95) in Richtung der Ausblasöffnung (100) erstreckt und umfangsseitig den Schutzraum (135) zumindest abschnittsweise umschließt, wobei die erste Düsenanordnung (140) beabstandet zu der Gehäuseöffnung (95) an der ersten Innenwand (105) angeordnet ist, wobei der erste Verbindungskanal (185) mit einem ersten Kanalabschnitt (190) an der ersten Durchtrittsöffnung (155) mündet, der schräg geneigt zu der Achse (55) ausgerichtet ist, wobei über den ersten Verbindungskanal (185) ein druckbeaufschlagtes Schutzgas (65) zu der ersten Durchtrittsöffnung (155) und von der ersten Durchtrittsöffnung (155) in den Schutzraum (135) führbar ist.

## Beschreibung

Die Erfindung betrifft eine Freiblaseinrichtung gemäß Patentanspruch 1, ein System gemäß Patentanspruch 13 sowie ein Verfahren zum Betrieb der Freiblaseinrichtung gemäß Patentanspruch 14.

Aus EP 0 547 227 A1 ist eine Vorrichtung zur optischen Oberflächeninspektion einer Walze bekannt. Dabei wird Druckluft parallel zu einem Schutzglas eines Gehäuses geführt, um eine Verschmutzung des Schutzglases zu vermeiden. Dabei wird beidseitig von oben und unten die Glasplatte mit Druckluft beströmt, was dazu führt, dass auch Schmutzpartikel aus einer Umgebung in demjenigen Bereich, wo die beiden Strömungen der Druckluft aufeinandertreffen, sich anlagern können.

Es ist Aufgabe der Erfindung, eine verbesserte Freiblaseinrichtung für ein System, ein verbessertes System und ein verbessertes Verfahren zum Betrieb des Systems bereitzustellen.

Diese Aufgabe wird mittels einer Freiblaseinrichtung gemäß Patentanspruch 1, eines Systems gemäß Patentanspruch 13 und mittels eines Verfahrens gemäß Patentanspruch 14 gelöst. Vorteilhafte Ausführungsformen sind in den abhängigen Ansprüchen angegeben.

Es wurde erkannt, dass eine verbesserte Freiblaseinrichtung dadurch bereitgestellt werden kann, dass die Freiblaseinrichtung wenigstens einen Strömungsverteiler, eine Gehäuseöffnung und eine Ausblasöffnung aufweist. Die Freiblaseinrichtung erstreckt sich entlang einer Achse zwischen der Gehäuseöffnung und der zur Gehäuseöffnung gegenüberliegend angeordneten Ausblasöffnung. Zwischen der Gehäuseöffnung und der Ausblasöffnung umschließt die Freiblaseinrichtung einen Schutzraum. An der Gehäuseöffnung ist eine Sensoreinrichtung anordenbar, und die Ausblasöffnung ist der staubbeladenen Umgebung zuwendbar. Der Strömungsverteiler weist wenigstens eine erste Düsenanordnung mit wenigstens einer ersten Durchtrittsöffnung, eine erste Innenwand und eine erste Kanalanordnung mit wenigstens einem ersten Verbindungskanal auf. Die erste Innenwand erstreckt sich von der Gehäuseöffnung in Richtung der Ausblasöffnung und umschließt umfangsseitig zumindest abschnittsweise den Schutzraum. Die erste Düsenanordnung ist beabstandet zu der Gehäuseöffnung an der ersten Innenwand angeordnet, wobei der erste Verbindungskanal mit einem ersten Kanalabschnitt an der ersten Durchtrittsöffnung mündet, der schräg geneigt zu der Achse ausgerichtet ist. Über den ersten Verbindungskanal kann ein druckbeaufschlagtes Schutzgas zu der ersten Durchtrittsöffnung und von der ersten Durchtrittsöffnung in den Schutzraum geführt werden.

Diese Ausgestaltung hat den Vorteil, dass durch die schräg geneigte Ausrichtung des ersten Kanalabschnitts des ersten Verbindungskanals vor der Gehäuseöffnung ein Schutzgaspolster des Schutzgases ausgebildet wird, dermaßen dass das Polster eine Anlagerung von Partikeln oder eine Hinführung von Partikeln in Richtung der Gehäuseöffnung verhindert. Dadurch kann eine Anlagerung von Partikeln im Bereich der Gehäuseöffnung, beispielsweise an einem Schutzglas eines Sensorgehäuses wirksam vermieden werden, sodass eine hohe Betriebsdauer des Systems bis zur nächsten Reinigung ermöglicht wird.

In einer weiteren Ausführungsform weist die Freiblaseinrichtung eine Abströmeinheit auf. Die erste Innenwand des Strömungsverteilers ist ausgehend von der Gehäuseöffnung in Richtung der Ausblasöffnung aufgeweitet ausgeformt. Die Abströmeinheit ist auf einer der Gehäuseöffnung abgewandten Seite des Strömungsverteilers angeordnet und schließt sich radial außen an die Ausblasöffnung an. Die Abströmeinheit umschließt den Schutzraum mit einer zweiten Innenwand umfangsseitig. Die zweite Innenwand ist ausgehend von dem Strömungsverteiler hin zu der Ausblasöffnung verjüngend ausgeformt. Diese Ausgestaltung hat den Vorteil, dass die zweite Innenwand durch das Schutzgas beströmt wird und eine Rückströmung, insbesondere von Partikeln aus der Umgebung, über die Ausblasöffnung hin zur Gehäuseöffnung entlang der zweiten Innenwand vermieden wird. Ferner wird dadurch sichergestellt, dass ein schmaler Rückströmpfad, entlang dessen die Partikel in Richtung Gehäuseöffnung rückströmen könnten, vermieden wird und weiträumig beabstandet die Partikel von der Gehäuseöffnung verbleiben. Ferner wird insbesondere durch die verjüngende Ausgestaltung der Abströmeinheit sichergestellt, dass eine Strömungsgeschwindigkeit des Schutzgases ausgehend von der zweiten Innenwand hin zu der Achse zunimmt und Partikel durch das über die Ausblasöffnung strömende Schutzgas von der Ausblasöffnung weggeblasen werden.

In einer weiteren Ausführungsform weist die zweite Innenwand angrenzend an den Strömungsverteiler eine erste maximale Erstreckung senkrecht zur Achse auf. In axialer Richtung bezogen auf die Achse weist die zweite Innenwand zwischen der Ausblasöffnung und angrenzend an den Strömungsverteiler eine erste Höhe auf. Ein erstes Verhältnis der ersten Höhe zu der ersten maximalen Erstreckung beträgt einschließlich 0,5 bis einschließlich 2. Diese Ausgestaltung stellt sicher, dass die Gehäuseöffnung von der Ausblasöffnung und der partikelbeladenen Umgebung räumlich weit beabstandet angeordnet ist.

In einer weiteren Ausführungsform weist die zweite Innenwand angrenzend an den Strömungsverteiler eine erste maximale Erstreckung senkrecht zur Achse auf. Die zweite Innenwand weist an der Ausblasöffnung eine zweite maximale Erstreckung senkrecht zur Achse auf. Ein zweites Verhältnis der zweiten maximalen Erstreckung zu der ersten maximalen Erstreckung beträgt einschließlich 0,5 bis einschließlich 0,8, insbesondere einschließlich 0,55 bis einschließlich 0,7. Diese Ausgestaltung hat den Vorteil, dass durch die verjüngende Ausgestaltung eine düsenartige Ausgestaltung der Freiblaseinrichtung, insbesondere der Abströmeinheit, zur Verfügung gestellt werden kann, bei der sich die Strömung des Schutzgases von der Gehäuseöffnung hin zur Ausblasöffnung beschleunigt.

In einer weiteren Ausführungsform weist die Freiblaseinrichtung eine erste Verteilkammer auf, wobei die erste Kanalanordnung mit dem ersten Verbindungskanal auf einer der ersten Durchtrittsöffnung abgewandten Seite in der ersten Verteilkammer mündet. Über die erste Verteilkammer ist das Schutzgas zu dem ersten Verbindungskanal führbar. Dabei ist von besonderem Vorteil, wenn die erste Verteilkammer ein deutlich größeres Volumen aufweist als ein Summenvolumen der Verbindungskanäle. Die erste Verteilkammer dient beispielsweise als Pufferspeicher für das Schutzgas und egalisiert das in die erste Verteilkammer einströmende Schutzgas.

In einer weiteren Ausführungsform weist die erste Düsenanordnung mehrere, vorzugsweise wenigstens einschließlich 10 bis einschließlich 25, insbesondere wenigstens 15 bis einschließlich 25, in Umfangsrichtung um die Achse beabstandet zueinander angeordnete erste Durchtrittsöffnungen auf. Jede der ersten Durchtrittsöffnungen ist mit jeweils einem zugeordneten ersten Kanalabschnitt des ersten Verbindungskanals fluidisch verbunden, wobei jeder der ersten Kanalabschnitte in jeweils einem ersten Kanalwinkel schräg zu der Achse angeordnet ist. Mittels der schrägen Anordnung der Vielzahl von Durchtrittsöffnungen und ersten Kanalabschnitten des jeweiligen ersten Verbindungskanals kann eine erste Einblaszone in dem Schutzraum im Betrieb der Freiblaseinrichtung geschaffen werden. Die erste Einblaszone kann das Schutzgaspolster umfangsseitig im Wesentlichen vollständig umschließen und eine im Wesentlichen stillstehende Strömung in dem Schutzgaspolster vor der Gehäuseöffnung erzielen.

In einer weiteren Ausführungsform weist der Strömungsverteiler eine zweite Düsenanordnung mit wenigstens einer zweiten Durchtrittsöffnung und einer zweiten Kanalanordnung mit wenigstens einem zweiten Verbindungskanal auf. Die zweite Düsenanordnung ist in axialer Richtung bezogen auf die Achse versetzt zu der ersten Düsenanordnung angeordnet. Jeweils der zweite Verbindungskanal weist einen zweiten Kanalabschnitt auf, wobei der zweite Kanalabschnitt an der zweiten Durchtrittsöffnung mündet und in einem zweiten Kanalwinkel geneigt zu der Achse anschließend an die zweite Durchtrittsöffnung ausgerichtet ist. Der zweite Kanalwinkel ist unterschiedlich, insbesondere kleiner, als der erste Kanalwinkel. Diese Ausgestaltung hat den Vorteil, dass durch die zweite Düsenanordnung eine zweite Einblaszone geschaffen werden kann, die umfangsseitig die erste Einblaszone umschließt und eine unterschiedliche Ausrichtung zu der ersten Einblaszone aufweist. Insbesondere kann die zweite Einblaszone aufgeweitet gegenüber der ersten Einblaszone ausgebildet sein. Dadurch wird zusätzlich die Gehäuseöffnung vor einem weiteren Eintritt von Partikeln durch die zweite Düsenanordnung geschützt.

In einer weiteren Ausführungsform weist die zweite Düsenanordnung mehrere, vorzugsweise wenigstens einschließlich 10 bis einschließlich 25, insbesondere wenigstens einschließlich 15 bis einschließlich 25, in Umfangsrichtung um die Achse beabstandet zueinander angeordnete zweite Durchtrittsöffnungen auf. Jede der zweiten Durchtrittsöffnungen ist mit jeweils einem zugeordneten zweiten Kanalabschnitt des zweiten Verbindungskanals fluidisch verbunden. Die Vielzahl der zweiten Durchtrittsöffnungen stellt sicher, dass dadurch in Umfangsrichtung vollständig umschließend die zweite Einblaszone ausgeformt wird, die die erste Einblaszone schützt.

In einer weiteren Ausführungsform weist die erste Durchtrittsöffnung jeweils eine erste Austrittsfläche auf, wobei der erste Kanalabschnitt beabstandet zu der ersten Durchtrittsöffnung jeweils eine erste Kanalquerschnittsfläche aufweist. Die zweite Durchtrittsöffnung weist jeweils eine zweite Austrittsfläche auf, wobei der zweite Kanalabschnitt beabstandet zu der zweiten Durchtrittsöffnung jeweils eine zweite Kanalquerschnittsfläche aufweist. Ein drittes Verhältnis einer ersten Summenquerschnittsfläche gebildet aus einer ersten Summe der ersten und zweiten Austrittsflächen zu einer zweiten Summenquerschnittsfläche gebildet aus einer zweiten Summe der ersten und zweiten Kanalquerschnittsflächen beträgt einschließlich 0,1 bis einschließlich 0,6, insbesondere einschließlich 0,2 bis einschließlich 0,5. Diese Ausgestaltung hat den Vorteil, dass die Durchtrittsöffnungen jeweils als Strömungswiderstand für das Schutzgas dienen und dadurch eine Geschwindigkeit des Schutzgases an der Durchtrittsöffnung besonders groß ist. Dies führt dazu, dass besonders die erste und/oder zweite Einblaszone stabil in dem Schutzraum ausgebildet wird.

In einer weiteren Ausführungsform weist die erste Durchtrittsöffnung jeweils eine erste Austrittsfläche auf, wobei die zweite Durchtrittsöffnung jeweils eine zweite Austrittsfläche aufweist. Ein viertes Verhältnis aus einer dritten Summenquerschnittsfläche gebildet aus einer dritten Summe der ersten Austrittsflächen zu einer vierten Summenquerschnittsfläche gebildet aus einer vierten Summe aller Austrittsflächen der Durchtrittsöffnungen beträgt einschließlich 0,2 bis einschließlich 0,5, insbesondere einschließlich 0,25 bis einschließlich 0,45. Dadurch wird eine gleichmäßige Befüllung des Schutzraums gewährleistet.

In einer weiteren Ausführungsform weist die erste Innenwand einen ersten Wandabschnitt auf, wobei der erste Wandabschnitt konusförmig ausgebildet ist. Der erste Wandabschnitt schließt zu der Achse einen ersten Wandwinkel ein. Der erste Wandwinkel beträgt vorzugsweise einschließlich 40° bis einschließlich 70°. Dabei ist von besonderem Vorteil, wenn der erste Kanalabschnitt des ersten Verbindungskanals vorzugsweise im Wesentlichen senkrecht zu dem ersten Wandwinkel ausgerichtet ist. Die konusförmige Ausgestaltung des ersten Wandabschnitts unterstützt ferner die Ausbildung der ersten Einblaszone.

In einer weiteren Ausführungsform weist die erste Innenwand einen zweiten Wandabschnitt auf, wobei der zweite Wandabschnitt konusförmig ausgeformt ist. Der zweite Wandabschnitt schließt zu der Achse einen zweiten Wandwinkel ein. Der zweite Wandwinkel ist größer als der erste Wandwinkel und kleiner 90°. Dabei schließt sich vorzugsweise der zweite Wandabschnitt radial außenseitig an den ersten Wandabschnitt an. Die Ausgestaltung des zweiten Wandabschnitts mit einem größeren zweiten Wandwinkel als der erste Wandwinkel führt dazu, dass der Strömungsverteiler an der ersten Innenwand gestuft ausgebildet ist und nur eine geringe axiale Erstreckung benötigt, bis er sich hin zu der Ausblaseinheit erstreckt. Dadurch kann eine kurze axiale Bauweise der Freiblaseinrichtung sichergestellt werden. Ferner kann, insbesondere bei einer im Wesentlichen senkrechten Ausrichtung des zweiten Kanalabschnitts des zweiten Verbindungskanals zu dem zweiten Wandabschnitt, die Ausbildung der zweiten Einblaszone auf einfache Weise sichergestellt werden.

Ein verbessertes System kann dadurch bereitgestellt werden, dass das System eine Sensoreinrichtung, eine Schutzgaseinrichtung und eine Freiblaseinrichtung aufweist. Die Freiblaseinrichtung ist wie oben beschrieben ausgebildet. Die Sensoreinrichtung weist einen Sensor, ein Sensorgehäuse und ein Schutzglas auf, wobei das Sensorgehäuse einen Gehäuseinnenraum umschließt, in dem der Sensor angeordnet ist. Das Schutzglas ist an der Gehäuseöffnung angeordnet und verschließt den Gehäuseinnenraum. Die Schutzgaseinrichtung ist ausgebildet, ein gereinigtes und/oder druckbeaufschlagtes Schutzgas bereitzustellen. Die Schutzgaseinrichtung ist ferner fluidisch mit der Freiblaseinrichtung verbunden.

Durch das gereinigte Schutzgas, das über die Freiblaseinrichtung an dem Schutzglas in den Schutzraum eingeblasen und geführt wird, kann die Anlagerung von Partikeln auf dem Schutzglas verhindert werden, sodass eine gute Aufzeichnung des Sensors durch das Schutzglas auf einer großindustriellen Anlage sichergestellt ist.

Ein verbessertes Verfahren zum Betrieb der oben beschriebenen Freiblaseinrichtung kann dadurch bereitgestellt werden, dass über den ersten Verbindungskanal ein druckbeaufschlagtes Schutzgas zu der ersten Düsenanordnung geführt wird. Das Schutzgas wird durch den ersten Kanalabschnitt ausgerichtet und ausgerichtet über die erste Durchtrittsöffnung in den Schutzraum geführt. Das Schutzgas strömt in Richtung der Ausblasöffnung in dem Schutzraum und bildet ein Schutzgaspolster an der Gehäuseöffnung aus. Das Schutzgas tritt an der Austrittsöffnung aus dem Schutzraum aus. Vorzugsweise führt das Schutzgas über die Ausblasöffnung eintretende Partikel aus dem Schutzraum aus und/oder reduziert einen Eintritt von Partikeln über die Ausblasöffnung in den Schutzraum. Dadurch kann wirksam die Anhaftung von Partikeln im Bereich der Gehäuseöffnung, insbesondere am Schutzglas der Sensoreinrichtung vermieden werden. Von besonderem Vorteil ist dabei, wenn das Schutzgas laminar mit einer Reynoldszahl von kleiner 16.000 in dem Schutzraum von der ersten Düsenanordnung in Richtung der Ausblasöffnung strömt. Vorzugsweise wird dabei ein bezüglich Querschnittsfläche der Ausblasöffnung relatives Volumen von im Wesentlichen einschließlich 0,04 l/min/mm² bis 0,4 l/min/mm² von Schutzgas in den Schutzraum geführt. Ferner ist von zusätzlich oder alternativ von Vorteil, wenn das Schutzgas mit einem Überdruck gegenüber einer Umgebung von einschließlich 0,5 bar bis einschließlich 1,5 bar, insbesondere einschließlich 0,7 bar bis einschließlich 1,0 bar, zugeführt wird.

Nachfolgend wird die Erfindung anhand von Figuren näher erläutert. Dabei zeigen:
- FIG 1: eine schematische Schnittansicht durch ein System gemäß einer ersten Ausführungsform für eine großindustrielle Anlage;
- FIG 2: einen in FIG 1 markierten Ausschnitt A der in FIG 1 gezeigten Freiblaseinrichtung;
- FIG 3: eine Draufsicht auf den Strömungsverteiler von der Ausblasöffnung her;
- FIG 4: eine Schnittansicht des in FIG 1 gezeigten Systems;
- FIG 5: eine Schnittansicht des in FIG 1 markierten Ausschnitts A der in FIG 1 gezeigten Freiblaseinrichtung;
- FIG 6: eine schematische Darstellung der Abströmeinheit und des Strömungsverteilers des in FIGN 1 bis 5 gezeigten Systems;
- FIG 7: eine perspektivische Darstellung eines Systems gemäß einer zweiten Ausführungsform;
- FIG 8: eine perspektivische Darstellung auf das in Fig. 7 gezeigte System gemäß der zweiten Ausführungsform;
- FIG 9: das System gezeigt in den FIGN 7 und 8, wobei in Fig. 9 auf die Darstellung der Freiblaseinrichtung verzichtet wird;
- FIG 10: eine Schnittansicht entlang einer in FIG 7 gezeigten Schnittebene B-B durch das in FIG 7 gezeigte System;
- FIG 11: eine perspektivische Darstellung eines Systems gemäß einer dritten Ausführungsform;
- FIG 12: einen Halblängsschnitt durch ein System gemäß einer dritten Ausführungsform;
- FIG 13: eine Schnittansicht entlang einer in FIG 12 gezeigten Schnittebene C-C durch das System;
- FIG 14: eine Schnittansicht entlang der in FIG 11 gezeigten Schnittebene E-E durch das Kamerasystem ; und
- FIG 15: eine Schnittansicht entlang einer in FIG 12 gezeigten Schnittebene D-D durch das in FIG 12 gezeigte System; und
- FIG 16: eine schematische Schnittansicht durch ein System gemäß einer vierten Ausführungsform für eine großindustrielle Anlage.

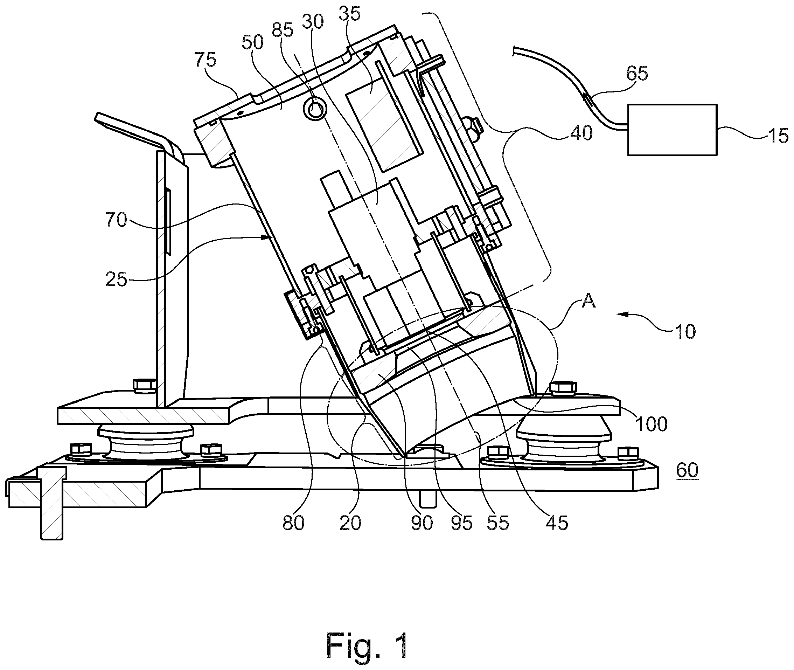

FIG 1 zeigt eine schematische Schnittansicht durch ein System 10 gemäß einer ersten Ausführungsform für eine großindustrielle Anlage.

Bei der großindustriellen Anlage kann es sich hierbei beispielsweise um eine Walzstraße, eine Schmelzeinrichtung, beispielsweise einen Lichtbogenofen oder einen Smelter, eine Gieß-Walz-Verbundanlage oder eine Strang-Gießmaschine handeln. Selbstverständlich sind auch andere großindustrielle Anlagen möglich.

Innerhalb der großindustriellen Anlage wird eine große Anzahl von Partikel und/oder Dampf bei der Herstellung von Produkten, beispielsweise von metallischen Gießereiprodukten, wie beispielsweise Brammen oder Knüppeln, oder Walzprodukten, beispielsweise Blech, durch die großindustrielle Anlage in ihre Umgebung 60 emittiert. Im Rahmen der Überwachung des jeweiligen Herstellungsprozesses und/oder der großindustriellen Anlage wird das im Folgenden beschriebene System 10 gemäß der jeweiligen Ausführungsform eingesetzt.

Das System 10 weist eine Schutzgaseinrichtung 15, eine Freiblaseinrichtung 20 und eine Sensoreinrichtung 25 auf. Die Sensoreinrichtung 25 weist wenigstens einen Sensor 30, ein Netzgerät 35 sowie ein Sensorgehäuse 40 und ein Schutzglas 45 auf. Der Sensor kann beispielsweise ein optischer Sensor, ein Bildsensor, beispielswiese ein CCD-Sensor oder ein CMOS-Sensor, sein. Ferner ist der Sensor ausgebildet eine elektromagnetische Strahlung mit einer Wellenlänge von einschließlich 350 nm bis einschließlich 900 nm, insbesondere aus dem UV-Bereich und/oder dem IR-Bereich zu erfassen.

Das Sensorgehäuse 40 umschließt einen Gehäuseinnenraum 50, wobei in dem Gehäuseinnenraum 50 der Sensor 30 sowie das Netzgerät 35 angeordnet sind. Das Sensorgehäuse 40 weist beispielsweise im Wesentlichen eine zylindrische Grundform auf und erstreckt sich entlang einer Achse 55. An einer ersten Stirnseite des Sensorgehäuses 40 ist das Schutzglas 45 angeordnet, das den Gehäuseinnenraum 50 stirnseitig verschließt. Das Schutzglas 45 ist für elektromagnetische Strahlung, insbesondere Lichtstrahlung, durchgängig. In axialer Richtung bezogen auf die Achse 55 ist beispielsweise versetzt zu dem Schutzglas 45 der Sensor 30 angeordnet. Der Sensor 30 ist auf das Schutzglas 45 gerichtet, um durch das Schutzglas 45 Bilder der großindustriellen Anlage aufzuzeichnen. Das Schutzglas 45 verschließt auf der zur großindustriellen Anlage zugewandten Seite den Gehäuseinnenraum 50 und verhindert ein Eindringen bzw. einen Luftaustausch mit der partikel- und/oder dampfbeladenen Umgebung 60 und somit eine Verschmutzung der im Gehäuseinnenraum 50 angeordneten Komponenten, insbesondere des Netzgeräts 35 und des Sensors 30.

Das Netzgerät 35 ist ausgebildet, um den Sensor 30 mit elektrischer Energie aus einem Stromnetz elektrisch zu versorgen. Beispielsweise ist in axialer Richtung gegenüberliegend zum Schutzglas 45 das Netzgerät 35 im Gehäuseinnenraum 50 angeordnet und mit dem Sensorgehäuse 40 elektrisch verbunden.

Axial anschließend an das Sensorgehäuse 40 ist auf einer dem Schutzglas 45 zugewandten Axialseite die Freiblaseinrichtung 20 an dem Sensorgehäuse 40 angeordnet. Die Freiblaseinrichtung 20 ist ausgebildet dazu, in der partikel- und/oder dampfbeladenen Umgebung 60 das Schutzglas 45 vor einer Verschmutzung mit Partikeln zu schützen. Auf die detaillierte Ausgestaltung der Freiblaseinrichtung 20 wird in den folgenden Figuren eingegangen. Dabei kann die Freiblaseinrichtung 20 in einer ersten Ausführungsform zusammen mit dem Sensorgehäuse 40 ausgebildet sein oder als optionales Anbauteil gemäß einer zweiten Ausführungsform zusätzlich und/oder nachträglich an dem Sensorgehäuse 40 montiert sein.

Die Freiblaseinrichtung 20 wird im Betrieb des Systems 10 in der partikel- und/oder dampfbeladenen Umgebung 60 durch die Schutzgaseinrichtung 15 mit einem druckbeaufschlagten Schutzgas 65 versorgt. Das Schutzgas 65 ist vorzugsweise gereinigt und weist eine reduzierte Anzahl von Partikeln verglichen mit der partikel- und/oder dampfbeladenen Umgebung 60 auf. Das Schutzgas 65 kann Luft aufweisen.

Das Sensorgehäuse 40 weist ein erstes Gehäuseteil 70, einen Gehäusedeckel 75 und beispielsweise ein zweites Gehäuseteil 80 auf. Das erste und/oder zweite Gehäuseteil 70, 80 kann beispielsweise hohlkörperartig, insbesondere hohlzylinderförmig, ausgebildet sein. Das erste und zweite Gehäuseteil 70, 80 erstreckt sich jeweils entlang der Achse 55. Das erste Gehäuseteil 70 und das zweite Gehäuseteil 80 sind axial anschließend nebeneinander angeordnet und beispielsweise miteinander verbunden. An dem zweiten Gehäuseteil 80 ist auf einer dem ersten Gehäuseteil 70 abgewandten Stirnseite das Schutzglas 45 befestigt. Auf einer zum Schutzglas 45 gegenüberliegenden Stirnseite des Sensorgehäuses 40 ist der Gehäusedeckel 75 angeordnet, der gegenüberliegend zum Schutzglas 45 den Gehäuseinnenraum 50 verschließt.

An dem ersten Gehäuseteil 70 kann ein Schutzgasanschluss 85 angeordnet sein, der beispielsweise in den Gehäuseinnenraum 50 mündet. An dem Schutzgasanschluss 85 ist die Schutzgaseinrichtung 15 fluidisch angeschlossen, und über den Schutzgasanschluss 85 kann das Schutzgas 65 in die Sensoreinrichtung 25 geführt werden. Dabei kann der Schutzgasanschluss 85 beispielsweise auf einer dem Gehäusedeckel 75 axial zugewandten Seite des Sensorgehäuses 40 angeordnet sein.

Auf der zum Gehäusedeckel 75 axial gegenüberliegenden Seite schließt sich an das zweite Gehäuseteil 80 die Freiblaseinrichtung 20 an.

Die Freiblaseinrichtung 20 weist wenigstens einen Strömungsverteiler 90, eine Gehäuseöffnung 95 und eine Ausblasöffnung 100 auf. Die Freiblaseinrichtung 20 erstreckt sich entlang der Achse 55, wobei die Gehäuseöffnung 95 auf der zur Sensoreinrichtung 25 axial zugewandten Seite angeordnet ist. Insbesondere schließt sich axial die Gehäuseöffnung 95 an das Schutzglas 45 an. Die Ausblasöffnung 100 ist axial bezogen auf die Achse 55 gegenüberliegend zu der Gehäuseöffnung 95 angeordnet. Die Ausblasöffnung 100 mündet in der partikel- und/oder dampfbeladenen Umgebung 60 und kann beispielsweise auf die großindustrielle Anlage gerichtet sein.

Im Betrieb nimmt der Sensor 30 Bilder auf und ist über das Schutzglas 45 und die Gehäuseöffnung 95 sowie die Ausblasöffnung 100 auf die großindustrielle Anlage gerichtet. Die Freiblaseinrichtung 20 schützt dabei das Schutzglas 45 mittels des druckbeaufschlagten Schutzgases 65 vor einer Verschmutzung mit Partikeln aus der partikel- und/oder dampfbeladenen Umgebung 60, sodass dauerhaft zuverlässig Aufnahmen der großindustriellen Anlage mit dem Sensor 30 möglich sind. Ferner wird eine Kondensation von Dampf an dem kühlen Schutzglas 45vermieden.

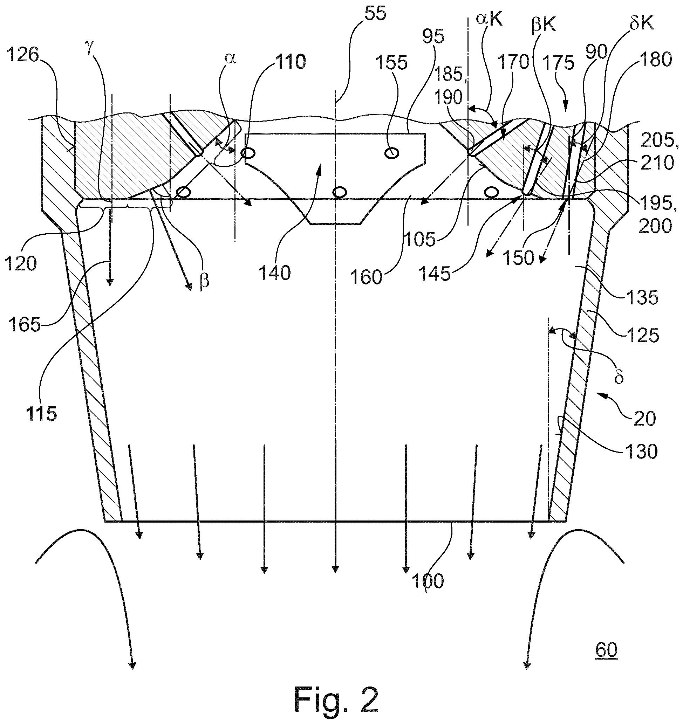

FIG 2 zeigt einen in FIG 1 markierten Ausschnitt A der in FIG 1 gezeigten Freiblaseinrichtung 20.

Die Gehäuseöffnung 95 wird umfangsseitig durch den Strömungsverteiler 90 umschlossen und kann beispielsweise ein kreisförmiges Profil aufweisen. Anschließend an die Gehäuseöffnung 95 weist der Strömungsverteiler 90 eine erste Innenwand 105 auf, die sich mit zunehmendem Abstand von der Gehäuseöffnung 95 hin zur Ausblasöffnung 100 aufweitet. Dabei kann die erste Innenwand 105 eine gestuft konusförmige Grundform aufweisen.

Die erste Innenwand 105 kann beispielsweise einen ersten Wandabschnitt 110 aufweisen, wobei der erste Wandabschnitt 110 beispielsweise konisch ausgeführt ist. Dabei kann der erste Wandabschnitt 110 in einem ersten Wandwinkel α zu der Achse 55 ausgeführt sein. Der erste Wandwinkel α kann einen Wert von einschließlich 40° bis einschließlich 70° aufweisen.

Zusätzlich kann der Strömungsverteiler 90 an der ersten Innenwand 105 einen zweiten Wandabschnitt 115 aufweisen, wobei sich der zweite Wandabschnitt 115 radial außenseitig und auch in axialer Richtung bezogen auf die Achse 55 an den ersten Wandabschnitt 110 anschließt. Der zweite Wandabschnitt 115 ist beispielsweise konisch ausgeführt, wobei mit zunehmendem Abstand an dem zweiten Wandabschnitt 115 ausgehend von der Gehäuseöffnung 95 hin zur Ausblasöffnung 100 sich der Strömungsverteiler 90 am zweiten Wandabschnitt 115 aufweitet. Der zweite Wandabschnitt 115 kann zu der Achse 55 einen zweiten Wandwinkel β einschließen, wobei der zweite Wandwinkel β größer ist als der erste Wandwinkel α. Der zweite Wandwinkel β kann einen Wert von einschließlich 55° bis einschließlich 85° aufweisen, jedenfalls größer α.

Zusätzlich kann zu dem ersten und zweiten Wandabschnitt 110, 115 der Strömungsverteiler 90 an der ersten Innenwand 105 einen dritten Wandabschnitt 120 aufweisen. Der dritte Wandabschnitt 120 schließt sich radial außen und in axialer Richtung an den zweiten Wandabschnitt 115 auf einer zum ersten Wandabschnitt 110 abgewandten Seite an. Der dritte Wandabschnitt 120 kann beispielsweise konisch oder senkrecht zu der Achse 55 ausgebildet sein. Dabei schließt der dritte Wandabschnitt 120 zu der Achse 55 einen dritten Wandwinkel γ ein, wobei der dritte Wandwinkel γ größer als der zweite Wandwinkel β und der erste Wandwinkel α ist. Der dritte Wandwinkel γ kann beispielsweise einschließlich 65° bis einschließlich 90° betragen, jedenfalls größer β.

Radial außen an den dritten Wandabschnitt 120 schließt sich eine erste äußere Umfangsseite 126 an, wobei die erste äußere Umfangsseite 126 im Wesentlichen zylinderförmig um die Achse 55 verlaufend ausgeformt ist.

Die Freiblaseinrichtung 20 weist ferner eine Abströmeinheit 125 auf. Die Abströmeinheit 125 kann einstückig und materialeinheitlich mit dem zweiten Gehäuseteil 80 ausgebildet sein. Auch können die Abströmeinheit 125 und das zweite Gehäuseteil 80 zweiteilig oder mehrteilig ausgebildet sein.

Die Abströmeinheit 125 schließt sich zumindest in axialer Richtung an den Strömungsverteiler 90 an. Zusätzlich kann, wie in FIG 2 gezeigt, die Abströmeinheit 125 auch umfangsseitig an der ersten äußeren Umfangsseite 126 den Strömungsverteiler 90 umschließen.

Die Abströmeinheit 125 ist hohlkörperartig ausgebildet und vorzugsweise als Rotationskörper um die Achse 55 ausgebildet. Umfangsseitig begrenzt beispielsweise in radialer Richtung die Abströmeinheit 125 die Ausblasöffnung 100. Die Abströmeinheit 125 weist eine zweite Innenwand 130 auf, die ausgehend von dem Strömungsverteiler 90 hin zu der Ausblasöffnung 100 verjüngend ausgeformt ist. Die zweite Innenwand 130 kann beispielsweise in einem vierten Wandwinkel δ zu der Achse 55 geneigt angeordnet sein. Der vierte Wandwinkel δ kann einschließlich 2° bis einschließlich 20° betragen.

Die zweite Innenwand 130 schließt sich axial auf der der Gehäuseöffnung 95 zugewandten Axialseite an die erste Innenwand 105 an. Zusammen mit der ersten Innenwand 105 begrenzt die zweite Innenwand 130 einen Schutzraum 135. Der Schutzraum 135 erstreckt sich ferner in axialer Richtung zwischen der Gehäuseöffnung 95 und der Ausblasöffnung 100 und ist an der Ausblasöffnung 100 offen ausgebildet.

Der Strömungsverteiler 90 weist eine erste Düsenanordnung 140 auf. Zusätzlich kann der Strömungsverteiler 90 neben der ersten Düsenanordnung 140 wenigstens eine zweite Düsenanordnung 145 und vorzugsweise eine dritte Düsenanordnung 150 aufweisen. Die Anzahl der Düsenanordnungen 140, 145, 150 ist dabei frei wählbar. Von besonderem Vorteil ist jedoch, wenn wenigstens die erste Düsenanordnung 140 und die zweite Düsenanordnung 145 vorgesehen sind. Die erste Düsenanordnung 140 ist beispielsweise am ersten Wandabschnitt 110, die zweite Düsenanordnung 145 ist am zweiten Wandabschnitt 115 und die dritte Düsenanordnung 150 ist vorzugsweise am dritten Wandabschnitt 120 angeordnet.

Die erste Düsenanordnung 140 weist wenigstens eine, vorzugsweise mehrere in Umfangsrichtung versetzt um die Achse 55 angeordnete erste Durchtrittsöffnungen 155 auf. Die erste Durchtrittsöffnung 155 kann beispielsweise ein teilringförmiges Profil aufweisen. Sind mehrere erste Durchtrittsöffnungen 155 vorgesehen, so können die ersten Durchtrittsöffnungen 155 vorzugsweise identisch ausgebildet sein und beispielsweise in einem regelmäßigen Abstand in Umfangsrichtung um die Achse 55 beabstandet zueinander angeordnet sein. Jede der ersten Durchtrittsöffnungen 155 weist eine erste Austrittsfläche auf, wobei vorzugsweise die ersten Austrittsflächen identisch sind. Dabei ist von besonderem Vorteil, wenn wenigstens einschließlich 10 bis einschließlich 25 erste Durchtrittsöffnungen 155, insbesondere wenigstens einschließlich 15 bis einschließlich 25, erste Durchtrittsöffnungen 155 vorgesehen sind. Die erste Durchtrittsöffnung 155 ist beispielsweise in dem ersten Wandabschnitt 110 ausgebildet.

Die zweite Düsenanordnung 145 ist radial außen zu der ersten Düsenanordnung 140, beispielsweise im zweiten Wandabschnitt 115 angeordnet. Die zweite Düsenanordnung 145 weist wenigstens eine, vorzugsweise mehrere zweite Durchtrittsöffnungen 160 auf. Insbesondere weist die zweite Düsenanordnung 145 wenigstens einschließlich 10 bis einschließlich 25, vorzugsweise wenigstens einschließlich 15 bis einschließlich 25, zweite Durchtrittsöffnungen 160 auf. Beispielsweise sind die zweiten Durchtrittsöffnungen 160 in Umfangsrichtung beabstandet, vorzugsweise regelmäßig, um die Achse 55 angeordnet. Die zweite Durchtrittsöffnung 160 kann beispielsweise ein teilringförmiges Profil und eine zweite Austrittsfläche aufweisen.

Die dritte Düsenanordnung 150 kann beispielsweise analog zur ersten und zweiten Düsenanordnung 140, 145 ausgebildet sein. Dabei weist die dritte Düsenanordnung 150 wenigstens eine dritte Durchtrittsöffnung 165 auf, wobei die dritte Durchtrittsöffnung 165 beispielsweise ein teilringförmiges Profil und eine dritte Austrittsfläche aufweist. Vorzugsweise weist die dritte Düsenanordnung 150 mehrere in Umfangsrichtung versetzt, vorzugsweise in regelmäßigem Abstand, angeordnete dritte Durchtrittsöffnungen 165 auf. Die dritte Düsenanordnung 150 ist beispielsweise in radialer Richtung beabstandet zu der zweiten Innenwand 130 sowie zu der ersten äußeren Umfangsseite 126 angeordnet.

Ferner weist der Strömungsverteiler 90 wenigstens eine erste Kanalanordnung 170 auf. Zusätzlich kann der Strömungsverteiler 90 eine zweite Kanalanordnung 175 und eine dritte Kanalanordnung 180 aufweisen. Die erste Kanalanordnung 170 weist wenigstens einen ersten Verbindungskanal 185 auf, wobei der erste Verbindungskanal 185 mit einem ersten Kanalabschnitt 190 an der ersten Durchtrittsöffnung 155 mündet. Der erste Kanalabschnitt 190 schließt sich direkt an die erste Durchtrittsöffnung 155 an und kann sich geradlinig anschließend an die erste Durchtrittsöffnung 155 erstrecken. Der erste Kanalabschnitt 190 ist in einem ersten Kanalwinkel αK geneigt zu der Achse 55 ausgerichtet. Der erste Kanalabschnitt 190 kann beispielsweise anschließend an die erste Durchtrittsöffnung 155 bohrungsartig ausgeformt sein. Der erste Kanalabschnitt 190 weist im Querschnitt beabstandet zur ersten Durchtrittsöffnung 155 eine erste maximale Kanalquerschnittsfläche auf. Ferner ist vorzugweise der erste Kanalabschnitt 190 senkrecht zu dem ersten Wandabschnitt 110 ausgerichtet.

In der Ausführungsform ist für jede erste Durchtrittsöffnung 155 jeweils ein erster Verbindungskanal 185 vorgesehen, wobei der erste Verbindungskanal 185 jeweils mit dem ersten Kanalabschnitt 190 an der jeweils zugeordneten ersten Durchtrittsöffnung 155 mündet. Über den ersten Verbindungskanal 185 kann das Schutzgas 65 jeweils hin zur ersten Durchtrittsöffnung 155 geführt werden, wobei eine Ausströmrichtung des Schutzgases 65 an der ersten Durchtrittsöffnung 155 durch eine Ausrichtung des ersten Kanalabschnitts 190 konstruktiv festgelegt ist.

Analog zu der ersten Kanalanordnung 170 weist die zweite Kanalanordnung 175 wenigstens einen zweiten Verbindungskanal 195 auf, wobei vorzugsweise für jede der zweiten Durchtrittsöffnungen 160 jeweils ein zweiter Verbindungskanal 195 der zweiten Kanalanordnung 175 vorgesehen ist. Der zweite Verbindungskanal 195 mündet jeweils an der zweiten Durchtrittsöffnung 160 mit einem zweiten Kanalabschnitt 200. Mit dem zweiten Kanalabschnitt 200, der beispielsweise bohrungsartig ausgebildet ist, kann eine Ausströmrichtung des Schutzgases 65 an der zweiten Durchtrittsöffnung 160 konstruktiv festgelegt werden. Der zweite Kanalabschnitt 200 des zweiten Verbindungskanals 195 kann beispielsweise bohrungsartig ausgebildet sein. Dabei ist der zweite Kanalabschnitt 200 in einem zweiten Kanalwinkel βK zu der Achse 55 ausgerichtet. Der zweite Kanalabschnitt 200 weist im Querschnitt beabstandet zur zweiten Durchtrittsöffnung 160 eine zweite maximale Kanalquerschnittsfläche auf. Ferner ist vorzugweise der zweite Kanalabschnitt 200 senkrecht zu dem zweiten Wandabschnitt 115 ausgerichtet.

Die dritte Kanalanordnung 180 weist wenigstens einen dritten Verbindungskanal 205 mit einem dritten Kanalabschnitt 210 auf, wobei der dritte Kanalabschnitt 210 anschließend an die dritte Durchtrittsöffnung 165 angeordnet ist. Der dritte Verbindungskanal 205 mündet an der dritten Durchtrittsöffnung 165, wobei sich an die dritte Durchtrittsöffnung 165 ein dritter Kanalabschnitt 210 des dritten Verbindungskanals 205 anschließt. Der dritte Kanalabschnitt 210 kann bohrungsartig ausgeformt sein. Dabei ist der dritte Kanalabschnitt 210 in einem dritten Kanalwinkel γK schräg geneigt oder senkrecht zu der Achse 55 ausgerichtet. Vorzugsweise kann der dritte Kanalabschnitt 210 parallel zu der zweiten Innenwand 130 ausgerichtet sein, sodass der dritte Kanalwinkel γK im Wesentlichen dem vierten Wandwinkel δ entspricht. Der dritte Kanalabschnitt 210 weist im Querschnitt beabstandet zur dritten Durchtrittsöffnung 165 eine dritte maximale Kanalquerschnittsfläche auf. Ferner ist vorzugweise der dritte Kanalabschnitt 210 senkrecht zu dem dritten Wandabschnitt 120 ausgerichtet.

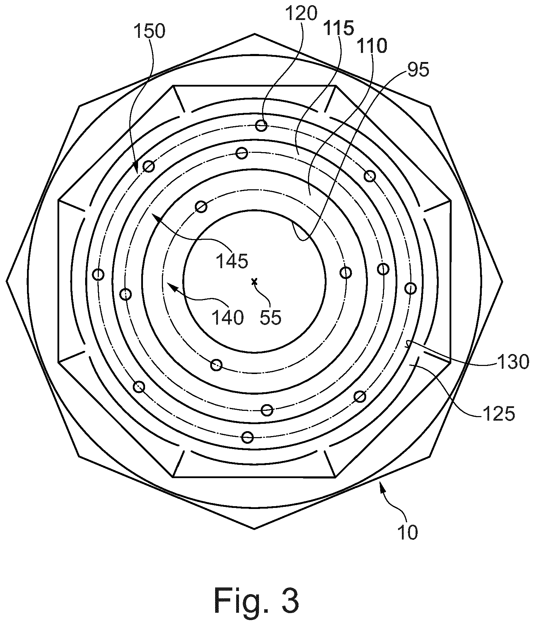

FIG 3 zeigt eine Draufsicht auf den Strömungsverteiler 90 von der Ausblasöffnung 100 her.

Die Gehäuseöffnung 95 ist zentriert auf die Achse 55 ausgerichtet. Die erste Düsenanordnung 140 ist auf einer ersten Kreisbahn um die Achse 55 angeordnet, wobei beispielsweise in radialer Richtung die erste Düsenanordnung 140 beispielsweise mittig zur maximalen Erstreckung im ersten Wandabschnitt 110 angeordnet ist.

Radial außen zu der ersten Düsenanordnung 140 ist am zweiten Wandabschnitt 115 die zweite Düsenanordnung 145 auf einer zweiten Kreisbahn um die Achse 55 verlaufend angeordnet. Dabei kann die zweite Düsenanordnung 145 in radialer Richtung in mittiger Lage zu einer maximalen Erstreckung des zweiten Wandabschnitts 115 ausgerichtet sein.

Die dritte Düsenanordnung 150 ist radial außen zu der zweiten Düsenanordnung 145 beispielsweise auf einer dritten Kreisbahn um die Achse 55 angeordnet. Dabei kann in radialer Richtung die dritte Düsenanordnung 150 mittig bezogen auf eine maximale Erstreckung des dritten Wandabschnitts 120 ausgerichtet sein.

Von besonderem Vorteil ist, wenn ein erstes Verhältnis einer ersten Summenquerschnittsfläche gebildet aus einer ersten Summe über die Austrittsflächen zu einer zweiten Summenquerschnittsfläche gebildet aus einer zweiten Summe der Kanalquerschnittsflächen einschließlich 0,1 bis einschließlich 0,6, insbesondere einschließlich 0,2 bis einschließlich 0,5 beträgt. In der Ausführungsform wird hier die erste Summe über alle ersten bis dritten Austrittsflächen und die zweite Summe über alle ersten bis dritten Kanalquerschnittsflächen gebildet.

Des Weiteren ist von Vorteil, wenn ein zweites Verhältnis aus der dritten Summenquerschnittsfläche gebildet aus der dritten Summe der ersten Austrittsflächen der ersten Durchtrittsöffnungen zu einer vierten Summenquerschnittsfläche gebildet aus einer vierten Summe aller Austrittsflächen einschließlich 0,2 bis einschließlich 0,5, insbesondere einschließlich 0,25 bis einschließlich 0,45 beträgt.

Ferner ist von Vorteil, wenn eine fünfte Summenquerschnittsfläche gebildet aus einer Summe der Blendenöffnungsfläche der Blendenöffnungen 215 größer ist als die erste Summenquerschnittsfläche.

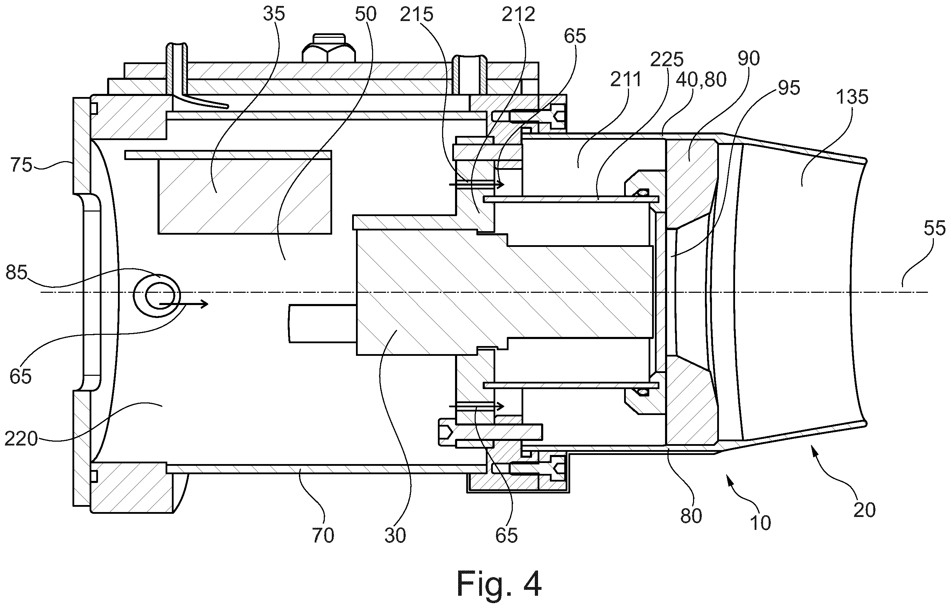

FIG 4 zeigt eine Schnittansicht des in FIG 1 gezeigten Systems 10.

Die Freiblaseinrichtung weist eine erste Verteilkammer 211 und eine zweite Verteilkammer 220 auf, wobei beispielhaft durch die integrierte Ausgestaltung der Freiblaseinrichtung 20 und des Sensorgehäuses 40 der Gehäuseinnenraum 50 beispielsweise in die erste Verteilkammer 211 und beispielsweise in die zweite Verteilkammer 220 zergliedert ist.

Dabei begrenzt beispielsweise das erste Gehäuseteil 70 zusammen mit dem Gehäusedeckel 75 auf der zum Schutzraum 135 abgewandten Seite die zweite Verteilkammer 220. Die zweite Verteilkammer 220 ist auf einer der Freiblaseinrichtung 20 abgewandten Seite angeordnet.

Das Sensorgehäuse 40 weist eine Strömungsblende 212 auf, die axial beabstandet zu dem Strömungsverteiler 90 auf der zum Gehäusedeckel 75 zugewandten Seite angeordnet ist. In axialer Richtung ist beispielsweise zwischen der Strömungsblende 212 und dem Strömungsverteiler 90 die erste Verteilkammer 211 angeordnet. In der ersten Verteilkammer 211 münden jeweils die erste bis dritte Kanalanordnung 170, 175, 180. Die erste Verteilkammer 211 kann ringförmig ausgebildet sein und sich in Umfangsrichtung um die Achse 55 herum erstrecken.

Die erste Verteilkammer 211 wird radial außen durch das zweite Gehäuseteil 80 begrenzt. Radial innenseitig kann in das zweite Gehäuseteil 80 eine Hülse 225 eingesetzt sein, die sich in axialer Richtung entlang der Achse 55 erstreckt. Durch die Hülse 225, die einen geringeren Außendurchmesser aufweist als ein Innendurchmesser des zweiten Gehäuseteils 80, wird die erste Verteilkammer 211 ringförmig ausgebildet und kann auch als Ringkammer bezeichnet werden. Die Hülse 225 ist beispielsweise derartig ausgestaltet, dass sie in radialer Richtung breiter ausgebildet ist als die Gehäuseöffnung 95 und damit außerhalb eines Erfassungsbereichs des Sensors 30 angeordnet ist.

Ein Volumen der ersten Verteilkammer 211 ist vorzugsweise größer gewählt als ein Summenvolumen der Verbindungskanäle 185, 195, 205 der Kanalanordnungen 170, 175, 180. Dabei ist die erste Verteilkammer 211 stromaufwärtsseitig zu den jeweiligen Kanalanordnungen 170, 175, 180 angeordnet.

Die Strömungsblende 212 ist stromaufwärtsseitig zu der ersten Verteilkammer 211 und dem Strömungsverteiler 90 angeordnet. Die Strömungsblende 212 kann eine oder mehrere Blendenöffnungen 215 aufweisen, die einen gegenüber der ersten Verteilkammer 211 geringeren Querschnitt aufweisen.

Axial auf der zum Gehäusedeckel 75 zugewandten Seite weist das Sensorgehäuse 40 die zweite Verteilkammer 220 auf, wobei die zweite Verteilkammer 220 in der Ausführungsform beispielhaft umfangsseitig durch das erste Gehäuseteil 70 begrenzt wird.

In der zweiten Verteilkammer 220 kann beispielsweise das Netzgerät 35 und/oder der Sensor 30 angeordnet sein. Dabei kann sich die zweite Verteilkammer 220 in axialer Richtung bezogen auf die Achse 55 zwischen dem Gehäusedeckel 75 und der Strömungsblende 212 erstrecken. In der Ausführungsform ist beispielsweise radial innenseitig zu der Strömungsblende 212 beispielhaft der Sensor 30 angeordnet. Ferner ist axial zwischen dem Sensor 30 und dem Gehäusedeckel 75 das Netzgerät 35 angeordnet.

Auf der zum Gehäusedeckel 75 zugewandten Seite, insbesondere axial zwischen dem Netzgerät 35 und dem Gehäusedeckel 75, ist der Schutzgasanschluss 85 angeordnet, wobei der Schutzgasanschluss 85 fluidisch mit der zweiten Verteilkammer 220 verbunden ist.

In der Ausführungsform weist der Strömungsverteiler 90 und/oder die Abströmeinheit 125 beispielsweise einen Kunststoff, insbesondere ein Thermoplast, oder ein Metall, insbesondere Aluminium, als Werkstoff auf. Dabei ist von besonderem Vorteil, wenn der Strömungsverteiler 90 und/oder die Abströmeinheit 125 im Rahmen eines 3D-Druckverfahrens hergestellt wird. Das Sensorgehäuse 40 ist in der Ausführungsform beispielsweise aus einem Metall, beispielsweise Stahl, insbesondere Edelstahl oder einem V2A- oder V4A-Stahl gefertigt. Dadurch kann einerseits die notwendige, komplexe Formgebung des Strömungsverteilers 90 und die Geometrie, insbesondere der ersten und zweiten Innenwand 105, 130 auf einfache Weise hergestellt werden, andererseits ist dadurch eine einfacher (Re)produktion beschädigter Teile des Systems 10 möglich.

In einer Weiterbildung können ferner an der ersten und/oder zweiten Innenwand 105, 130 Strukturen wie zum Beispiel Nuten oder Finnen angeordnet sein, um den ausströmenden Schutzgasstrom im Schutzraum weiter zu stabilisieren und zu richten.

Zur Versorgung des Strömungsverteilers 90 mit Schutzgas 65 wird von der Schutzgaseinrichtung 15 das Schutzgas 65 bereitgestellt und über den Schutzgasanschluss 85 in die zweite Verteilkammer 220 eingeleitet. Dabei kann beispielsweise die Schutzgaseinrichtung 15 ein bezüglich Ausblasöffnung 100 relatives Volumen von im Wesentlichen einschließlich 0,04 l/min/mm² bis 0,4 l/min/mm² von Schutzgas mit einem Überdruck gegenüber einer Umgebung 60 von einschließlich 0,5 bar bis einschließlich 1,5 bar, insbesondere einschließlich 0,7 bar bis 1,0 bar bereitstellen. Das Schutzgas 65 ist gereinigt und weist für eine optimale Unterstützung der erfindungsgemäßen Vorrichtung Partikel mit einer maximalen Größe von 0,01 µm bis 0,02 µm auf. Dies wird üblicherweise durch Vorschaltung einer Wartungseinheit mit Partikelfilter und Ölabscheider gewährleistet.

Durch die großvolumige Ausgestaltung der zweiten Verteilkammer 220, insbesondere mit einem deutlich größeren Volumen als das Volumen der ersten Verteilkammer 211, wird die Strömung des Schutzgases 65 in der zweiten Verteilkammer 220 beruhigt. Dabei ist von besonderem Vorteil, wenn eine maximale erste axiale Kammererstreckung wenigstens einschließlich 10 % bis einschließlich 30 % einer maximalen ersten radialen Kammererstreckung in radialer Richtung entspricht.

Das Schutzgas 65 fungiert in der zweiten Verteilkammer 220 zusätzlich als Kühlmedium zur Kühlung des Netzgeräts 35 und/oder der Sensor 30. Dabei wird das Schutzgas 65 durch das Netzgerät 35 und/oder den Sensor 30 erwärmt. Das erwärmte Schutzgas 65 strömt über die Strömungsblende 212 in die erste Verteilkammer 211 ein.

Die Strömungsblende 212 bildet einen ersten Strömungswiderstand aus und richtet ferner die Strömungsrichtung des Schutzgases 65 im Wesentlichen parallel zur Achse 55. In der ersten Verteilkammer 211 wird die Strömung des Schutzgases 65 beruhigt. Aus der ersten Verteilkammer 211 strömt das Schutzgas 65 in die Kanalanordnungen 170, 175, 180 ein. Dadurch dass die fünfte Summenquerschnittsfläche der Blendenöffnungsflächen der Blendenöffnungen 215 kleiner ist als die erste Summenquerschnittsfläche, wird ein beruhigtes Abströmen des Schutzgases 65 stromabwärtsseitig der Strömungsblende 212 über den Strömungsverteiler 90 sichergestellt.

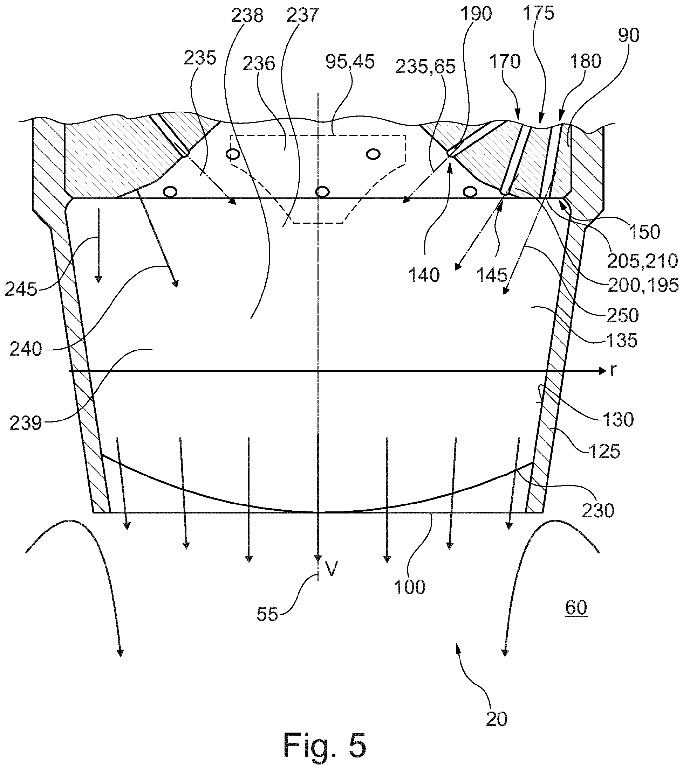

FIG 5 zeigt den in FIG 1 markierten Ausschnitt A der in FIG 1 gezeigten Freiblaseinrichtung 20.

In FIG 5 ist mittels Pfeilen die Strömung des Schutzgases 65 symbolisch in der Freiblaseinrichtung 20 dargestellt. Ferner ist in FIG 5 ein Graph 230 einer Strömungsgeschwindigkeit v des Schutzgases 65 an der Ausblasöffnung 100 aufgetragen über einen Abstand r zur Achse 55 eingezeichnet.

Das Schutzgas 65 strömt über die Kanalanordnungen 170, 175, 180 jeweils zu der zugeordneten Düsenanordnung 140, 145, 150. Dabei tritt ein erster Teil 235 des Schutzgases 65 über die erste Düsenanordnung 140 mit dem ersten Kanalwinkel αK des ersten Kanalabschnitts 190 zu der Achse 55 in den Schutzraum 135 ein und strömt schräg nach innen hin zur Achse 55. Dabei bildet der erste Teil 235 eine erste Einblaszone 237 aus. Dabei umschließt der erste Teil 235 des Schutzgases 65 mit der ersten Einblaszone 237 ein beruhigtes stabiles Schutzgaspolster 236, das direkt an der Gehäuseöffnung 95 vor dem Schutzglas 45 angeordnet ist. Im Schutzgaspolster 236 ist eine Strömungsgeschwindigkeit des Schutzgases mit einer Geschwindigkeit von wenigstens 0,01 bis 0,5 im Verhältnis zu der an der ersten Durchtrittsöffnung 155 vorhanden. Das Schutzgaspolster 236 verhindert im Wesentlichen, dass Partikel direkt an das Schutzglas 45 transportiert werden und sich an dem Schutzglas 45 anlagern können.

Ein zweiter Teil 240 des Schutzgases 65 tritt von der zweiten Kanalanordnung 175 über die zweite Düsenanordnung 145 in den Schutzraum 135 ein, wobei durch den zweiten Kanalwinkel βK des zweiten Kanalabschnitts 200 des zweiten Verbindungskanals 195 die Ausrichtung des zweiten Teils 240 des Schutzgases 65 geneigt gegenüber dem ersten Teil 235 ist. Dabei strömt der zweite Teil 240 entlang dem ersten Teil 235 und ist stärker in Richtung der Ausblasöffnung 100 gerichtet als der erste Teil 235 des Schutzgases 65. Der zweite Teil 240 des Schutzgases 65 verhindert die Strömung von Partikeln in Richtung des ersten Teils 235 sowie schützt den ersten Teil 235 des Schutzgases 65 und bildet hierbei eine zweite Einblaszone 238 aus.

Ein dritter Teil 245 des Schutzgases 65 strömt von der ersten Verteilkammer 211 über die dritte Kanalanordnung 180 zur dritten Düsenanordnung 150 und tritt über die dritte Düsenanordnung 150 in den Schutzraum 135 ein, wobei die Ausrichtung des dritten Teils 245 des Schutzgases 65 durch den dritten Kanalabschnitt 210 des dritten Verbindungskanals 205 erfolgt. Der dritte Teil 245 kann parallel zur zweiten Innenwand 130 oder schräg geneigt auf die zweite Innenwand 130 ausgerichtet sein, sodass der dritte Teil 245 des Schutzgases 65 entlang der zweiten Innenwand 130 in Richtung der Ausblasöffnung 100 strömt und eine dritte Einblaszone 239 von Schutzgas 65 im Schutzraum 135 ausgebildet wird.

Ferner wird durch die oben beschriebenen Volumenströme von Schutzgas 65 sichergestellt, dass Schutzgas 65 in dem Schutzraum 135 vor allem laminar mit einer Reynoldszahl von kleiner 16.000 aus dem Strömungsverteiler 90 in Richtung der Ausblasöffnung 100 strömt.

Durch die verjüngende Ausgestaltung der Abströmeinheit 125 an der zweiten Innenwand 130 ausgehend von dem Strömungsverteiler 90 in Richtung der Ausblasöffnung 100 ist die Strömungsgeschwindigkeit v des Schutzgases 65 auf der Achse 55 und somit zentriert im Schutzraum 135 größer als mit zunehmendem Abstand r hin zur zweiten Innenwand 130.

Durch die Ausbildung der Einblaszonen mittels der ersten bis dritten Düsenanordnung 140, 145, 150 innerhalb des Schutzraums 135 wird eine ungewollte Einströmung von partikelbeladener verschmutzter Luft aus der Umgebung 60 über die Ausblasöffnung 100 im Betrieb des Systems 10 wirksam verhindert, sodass sowohl durch das von dem Strömungsverteiler 90 in Richtung der Ausblasöffnung 100 blasende Schutzgas 65 als auch durch das Schutzgaspolster 236 vor dem Schutzglas 45 das Anhaften von Partikeln an dem Schutzglas 45 verhindert wird, selbst wenn sich eine Rückströmung von Partikeln in den Schutzraum 135 ausbilden sollte, wodurch eine zuverlässige Bildaufnahme durch den Sensor 30 über das Schutzglas 45 sichergestellt ist.

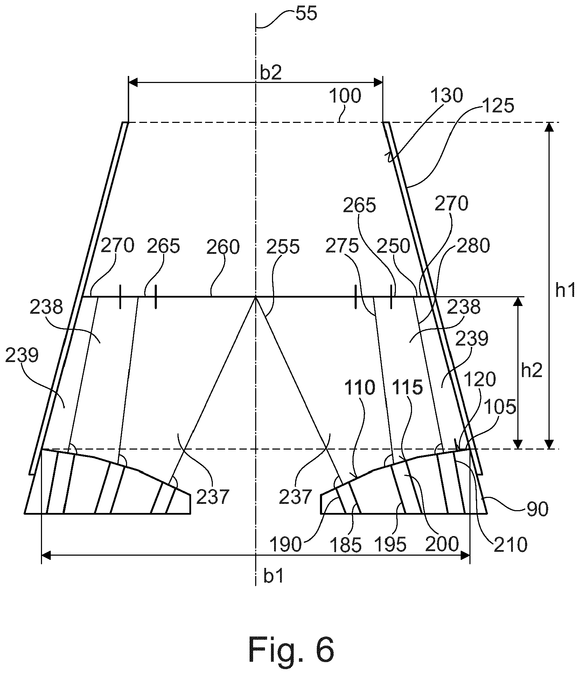

FIG 6 zeigt eine schematische Darstellung der Abströmeinheit 125 und des Strömungsverteilers 90 des in FIGN 1 bis 5 gezeigten Systems 10.

Die Abströmeinheit 125 weist direkt angrenzend an die erste Innenwand 105 an der zweiten Innenwand 130 eine erste maximale radiale Erstreckung b1 senkrecht zu der Achse 55 auf. Bei einer hohlkonusartigen Ausgestaltung der Abströmeinheit 125 kann die erste maximale radiale Erstreckung auch als erster maximaler Innendurchmesser b1 bezeichnet werden.

An der Ausblasöffnung 100 weist an der zweiten Innenwand 130 die Abströmeinheit 125 eine zweite maximale radiale Erstreckung b2 senkrecht zu der Achse 55 auf, die auch als zweiter Innendurchmesser b2 bezeichnet werden kann. Entlang der Achse 55 in axialer Richtung weist angrenzend an die erste Innenwand 105 die zweite Innenwand 130 bis hin zur Ausblasöffnung 100 eine erste Höhe h1 auf.

Von besonderem Vorteil ist, wenn ein erstes Verhältnis der ersten Höhe h1 zu der ersten maximalen Erstreckung b1 einschließlich 0,5 bis einschließlich 2 beträgt. Ferner ist von Vorteil, wenn ein zweites Verhältnis der zweiten Erstreckung b2 zu der ersten Erstreckung b1 einschließlich 0,5 bis einschließlich 0,8, insbesondere einschließlich 0,55 bis einschließlich 0,7, beträgt.

Von besonderem Vorteil ist, wenn der erste Kanalabschnitt 190 des ersten Verbindungskanals 185 zu dem ersten Wandabschnitt 110 im Wesentlichen senkrecht ausgerichtet ist. Dabei kann der erste Kanalabschnitt 190 mit einer Abweichung von ± 10° zu einer Senkrechten an den ersten Wandabschnitt 110 ausgerichtet sein. Ferner kann der zweite Kanalabschnitt 200 des zweiten Verbindungskanals 195 mit einer Abweichung von ± 10° zu einer Senkrechten an den zweiten Wandabschnitt 115 zu dem zweiten Wandabschnitt 115 ausgerichtet sein. Der dritte Kanalabschnitt 210 kann in analoger Weise mit einer Abweichung von ± 10° zu einer Senkrechten an den dritten Wandabschnitt 120 zu dem dritten Wandabschnitt 120 ausgerichtet sein.

In FIG 6 ist eine Schnittebene 250 zwischen der ersten maximalen Erstreckung b1 und der zweiten maximalen Erstreckung b2 aufgetragen. Dabei weist die Schnittebene 250 eine zweite Höhe h2 zu der ersten maximalen Erstreckung b1 am Übergang zwischen der ersten Innenwand 105 und der zweiten Innenwand 130 auf. Die zweite Höhe h2 beträgt wenigstens einschließlich 0,2 bis einschließlich 0,5 der ersten maximalen Erstreckung b1.

In der Schnittebene 250 sind ein Kreis 260, ein erster Ring 265 und vorzugsweise ein zweiter Ring 270 angeordnet. Der Kreis 260 ist zentriert zu der Achse 55 in der Schnittebene 250 ausgerichtet. Der erste Ring 265 schließt sich radial außenseitig direkt an den Kreis 260 an. Der zweite Ring 270 ist radial außenseitig direkt anschließend an den ersten Ring 265 und schließt sich radial außenseitig in der Ausführungsform beispielsweise an die zweite Innenwand 130 an. Eine Fläche des Kreises 260 entspricht im Wesentlichen einer zweiten Fläche des ersten Rings 265 und einer dritten Fläche des zweiten Rings 270.

Der erste Kanalabschnitt 190 ist derart zu der Schnittebene 250 ausgerichtet, dass er die Schnittebene 250 in einer ersten Verlängerung 255 der ersten Kanalabschnitte 190 in dem Kreis 260, vorzugsweise auf der Achse 55, schneidet.

Der zweite Kanalabschnitt 200 ist derartig in dem Strömungsverteiler 90 ausgerichtet, dass eine zweite Verlängerung 275 des zweiten Kanalabschnitts 200 den ersten Ring 265 in der Schnittebene 250 schneidet. Vorzugsweise schneidet die zweite Verlängerung 275 in radialer Richtung in mittiger Lage den ersten Ring 265.

Der dritte Kanalabschnitt 210 ist derartig ausgerichtet, dass eine dritte Verlängerung 280 des dritten Kanalabschnitts 210 den zweiten Ring 270 in der Schnittebene 250 schneidet. Vorzugsweise ist der dritte Kanalabschnitt 210 derartig ausgerichtet, dass die dritte Verlängerung 280 in mittiger Lage in radialer Richtung bezogen auf eine maximale radiale Breite des zweiten Rings 270 den zweiten Ring 270 schneidet.

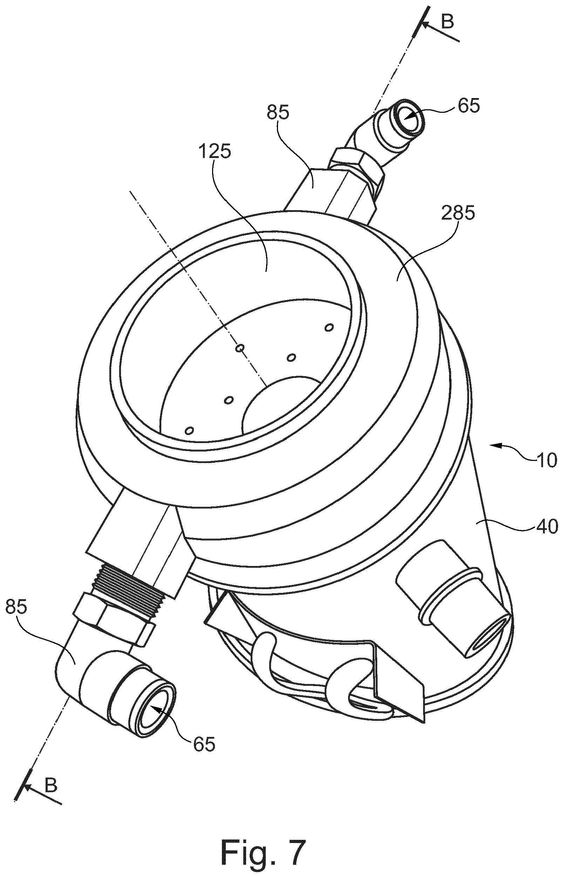

FIG 7 zeigt eine perspektivische Darstellung eines Systems 10 gemäß einer zweiten Ausführungsform.

Das System 10 ist im Wesentlichen identisch zu dem in den FIGN 1 bis 6 erläuterten System 10 ausgebildet. Nachfolgend wird ausschließlich auf die Unterschiede des in FIG 7 gezeigten Systems 10 gemäß der zweiten Ausführungsform gegenüber dem in den FIGN 1 bis 6 gezeigten System 10 gemäß der ersten Ausführungsform eingegangen.

In der Ausführungsform ist hier die Freiblaseinrichtung 20 als eine nachträglich am Sensorgehäuse 40 montierbare Nachrüstkomponente ausgebildet. Aus diesem Grund weist die Freiblaseinrichtung 20 ein Gehäuse 285 auf. Das Gehäuse 285 ist radial außenseitig zu der Abströmeinheit 125 angeordnet und kann einstückig und materialeinheitlich mit der Abströmeinheit 125 ausgebildet sein. Radial außenseitig ist an dem Gehäuse 285 der Schutzgasanschluss 85 vorgesehen. In der Ausführungsform sind beispielsweise zwei gegenüberliegend zueinander angeordnete Schutzgasanschlüsse 85 beispielhaft vorgesehen, um hinreichend Schutzgas 65 zuführen zu können.

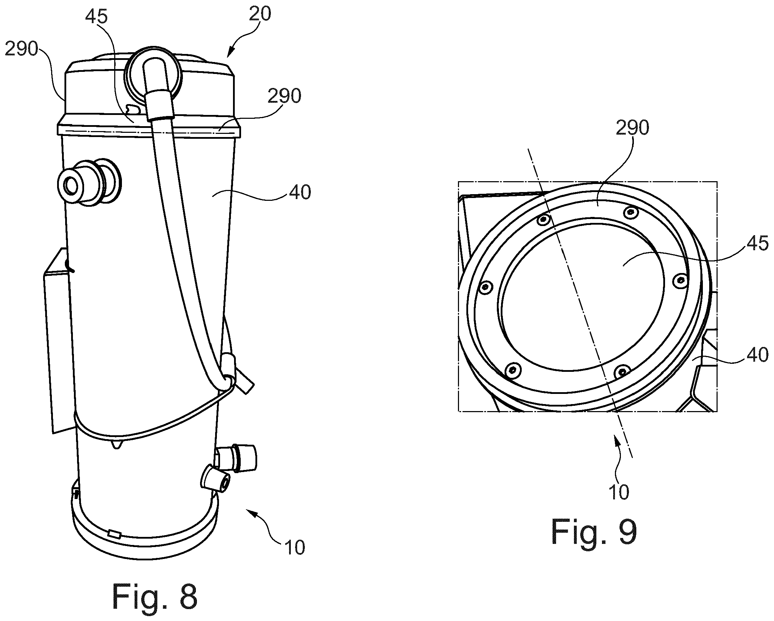

FIG 8 zeigt eine perspektivische Darstellung auf das in FIG 7 gezeigte System 10 gemäß der zweiten Ausführungsform.

In FIG 8 ist deutlich zu erkennen, wie die Freiblaseinrichtung 20 stirnseitig an dem Sensorgehäuse 40 als Nachrüstkomponente angeordnet ist. Die Befestigung der Freiblaseinrichtung 20 an dem System 10 kann beispielsweise mittels eines Adapterrings 290 erfolgen, wobei der Adapterring 290 stirnseitig auf der zur Freiblaseinrichtung 20 zugewandten Seite radial außen an dem Schutzglas 45 angeordnet ist.

FIG 9 zeigt das System 10 gezeigt in den FIGN 7 und 8, wobei in FIG 9 auf die Darstellung der Freiblaseinrichtung 20 verzichtet wird.

Der Adapterring 290 ist beispielsweise radial außenseitig an dem Sensorgehäuse 40 mittels einer Schraubverbindung befestigt, wobei der Adapterring 290 das Schutzglas 45 so weit nicht bedeckt, dass eine hinreichende Aufnahme mittels des Sensors 30 möglich ist.

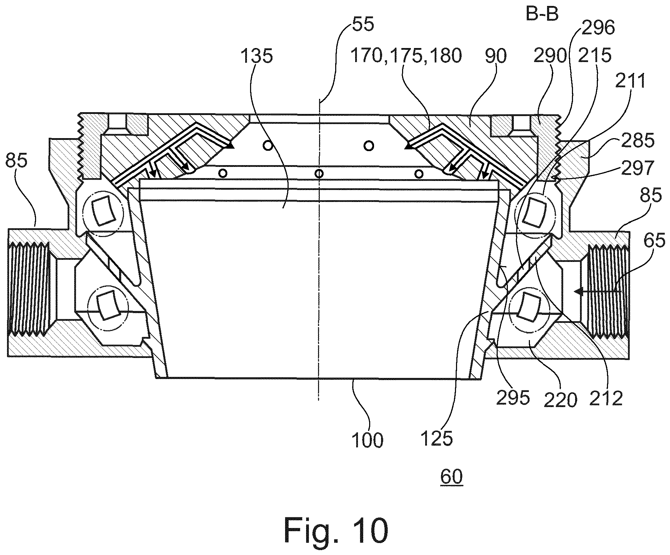

FIG 10 zeigt eine Schnittansicht entlang einer in FIG 7 gezeigten Schnittebene B-B durch das in FIG 7 gezeigte System 10.

Anstatt des Sensorgehäuses 40, wie in den FIGN 1 bis 6, gezeigt begrenzt das Gehäuse 285 der Freiblaseinrichtung 20 zusammen mit einer zweiten äußeren Umfangsseite 295 der Abströmeinheit 125 die erste Verteilkammer 211 und die zweite Verteilkammer 220. Die zweite Verteilkammer 220 ist beispielhaft auf einer dem Strömungsverteiler 90 abgewandten Seite in axialer Richtung radial außenseitig an der Abströmeinheit 125 angeordnet. In der zweiten Verteilkammer 220 mündet jeweils radial außen der Schutzgasanschluss 85. Die zweite Verteilkammer 220 ist beispielsweise als erste Ringkammer ausgebildet und in Umfangsrichtung um die Achse 55 radial außenseitig an der Abströmeinheit 125 angeordnet.

Axial zwischen der ersten Verteilkammer 211 und der zweiten Verteilkammer 220 ist die Strömungsblende 212 angeordnet. Die Strömungsblende 212 kann beispielhaft konusförmig ausgeformt sein und eine Vielzahl von Blendenöffnungen 215 aufweisen, die beispielsweise schlitzförmig in der Strömungsblende 212 ausgeformt sind. Die Blendenöffnungen 215 können beispielsweise auf einem gemeinsamen Kreis um die Achse 55 angeordnet sein. Jede der Blendenöffnungen 215 weist eine Blendenöffnungsfläche auf.

Radial dem Strömungsverteiler 90 zugewandt ist die erste Verteilkammer 211 angeordnet. Auch die erste Verteilkammer 211 wird radial außenseitig durch das Gehäuse 285 und radial innenseitig durch die Abströmeinheit 125 begrenzt. Axial schließen sich der Strömungsverteiler 90 sowie der Adapterring 290 an die erste Verteilkammer 211 an und begrenzen in axialer Richtung die erste Verteilkammer 211. An der ersten Verteilkammer 211 mündet die erste bis dritte Kanalanordnung 170, 175, 180.

Im Betrieb wird analog zu den FIGN 1 bis 6 über den Schutzgasanschluss 85 das Schutzgas 65 druckbeladen bereitgestellt. Das Schutzgas 65 strömt über den Schutzgasanschluss 85 in die zweite Verteilkammer 220 ein. Druckschwankungen oder Strömungsungleichmäßigkeiten im Schutzgas 65 werden durch die im Vergleich zur ersten Verteilkammer 211 größere Ausgestaltung der zweiten Verteilkammer 220 in der zweiten Verteilkammer 220 egalisiert.

Von der zweiten Verteilkammer 220 strömt das Schutzgas 65 durch die Blendenöffnungen 215 in die erste Verteilkammer 211. Durch die kleinen Durchlässe der Blendenöffnungen 215 wird eine Ausrichtung des in axialer Richtung strömenden Schutzgases 65 erzielt, und in der ersten Verteilkammer 211 wird das Schutzgas 65 nochmals egalisiert und beruhigt. Das Schutzgas 65 strömt aus der ersten Verteilkammer 211 in die ersten bis dritten Kanalanordnungen 170, 175, 180. Von den Kanalanordnungen 170, 175, 180 wird, wie in den FIGN 1 bis 6 erläutert, das Schutzgas 65 über die Düsenanordnungen 140, 145, 150 in den Schutzraum 135 geführt und aus dem Schutzraum 135 über die Ausblasöffnung 100 in die Umgebung 60 geführt.

Die in den FIGN 7 bis 10 gezeigte zweite Ausführungsform hat den Vorteil, dass bereits bestehende Systeme 10 mit der Freiblaseinrichtung 20 nachgerüstet werden können oder das bestehende System 10, insbesondere das Sensorgehäuse 40, nicht weiter angepasst werden muss.

Von besonderem Vorteil ist dabei, wenn beispielsweise an dem Adapterring 290 ein Außengewinde 296 angeordnet ist, wobei auf das Außengewinde 296 mittels eines Innengewindes 297 das Gehäuse 285 aufgeschraubt werden kann.

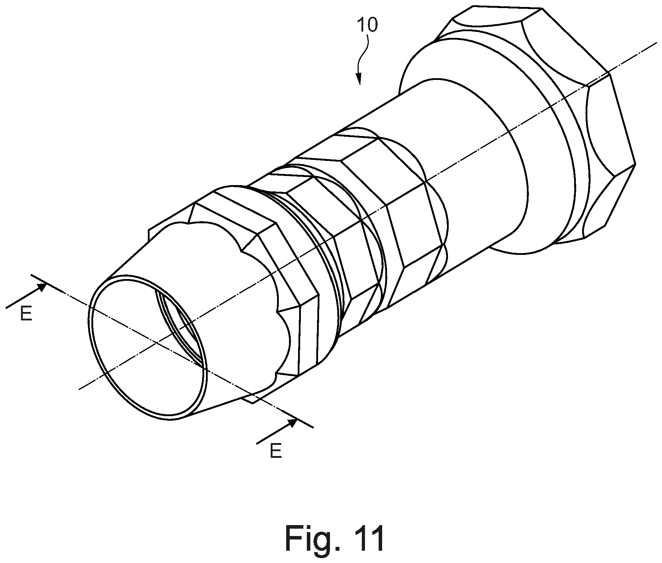

FIG 11 zeigt eine perspektivische Darstellung eines Systems 10 gemäß einer dritten Ausführungsform.

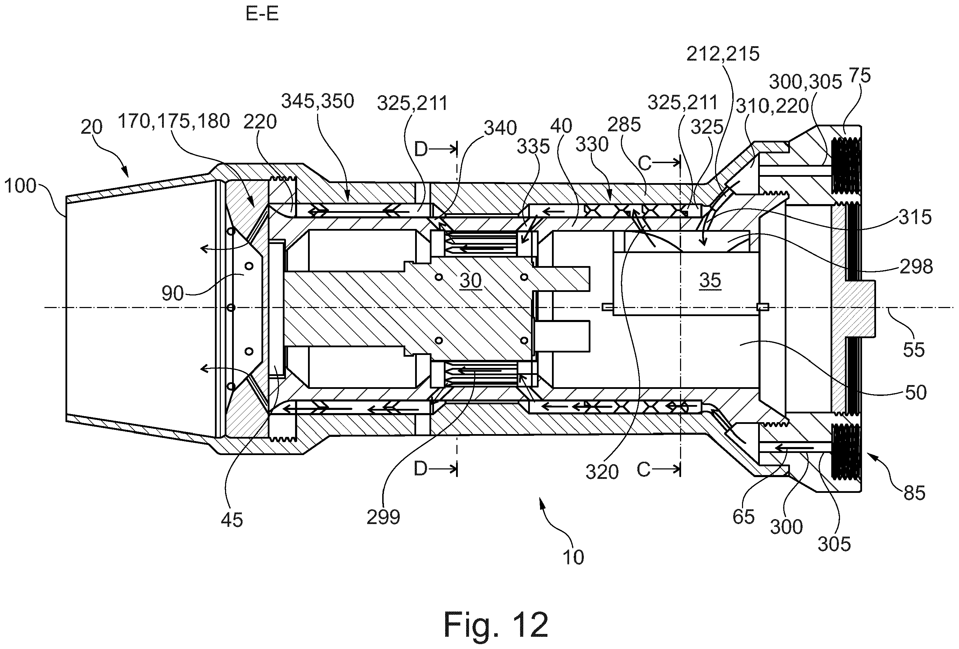

Das System 10 ist eine Kombination aus der in den FIGN 1 bis 10 gezeigten ersten und zweiten Ausführungsform des Systems 10. Dabei werden nachfolgend vor allem die Unterschiede des in FIG 12 gezeigten Systems 10 gemäß der dritten Ausführungsform gegenüber dem in den FIGN 1 bis 6 gezeigten System 10 gemäß der ersten Ausführungsform beschrieben. Dabei sind insbesondere die Freiblaseinrichtung 20 und das Sensorgehäuse 40 integriert ausgebildet, sodass das Sensorgehäuse 40 auch Teil der Freiblaseinrichtung 20 ist.

FIG 12 zeigt einen Halblängsschnitt entlang einer in FIG 11 gezeigten Schnittebene E-E durch das in FIG 11 gezeigte System 10 gemäß der dritten Ausführungsform.

Der Gehäuseinnenraum 50 des Sensorgehäuses 40 ist beispielsweise untergliedert in einen Gehäuseinnenraumabschnitt 298 und einen von dem ersten Gehäuseinnenraumabschnitt 298 abgetrennten zweiten Gehäuseinnenraumabschnitt 299. Der zweite Gehäuseinnenraumabschnitt 299 ist auf der zum Schutzglas 45 zugewandten Seite und der erste Gehäuseinnenraumabschnitt 298 ist auf einer dem Gehäusedeckel 75 zugewandten Seite angeordnet. In dem ersten Gehäuseinnenraumabschnitt 298 ist das Netzgerät 35 und in dem zweiten Gehäuseinnenraumabschnitt 299 ist der Sensor 30 angeordnet.

Der Schutzgasanschluss 85 ist beispielsweise an dem Gehäusedeckel 75 angeordnet. In dem Gehäusedeckel 75 ist eine vierte Kanalanordnung 300 mit wenigstens einem vierten Verbindungskanal 305 angeordnet.

Das Gehäuse 285 ist beispielsweise radial außenseitig des Sensorgehäuses 40 angeordnet. Das Gehäuse 285 begrenzt zusammen mit dem Sensorgehäuse 40 einen ersten Ringkanal 310, der stirnseitig auf der zum Gehäusedeckel 75 zugewandten Seite angeordnet ist. Der erste Ringkanal 310 ist um die Achse 55 radial außenseitig an dem Sensorgehäuse 40 und in Umfangsrichtung um das Sensorgehäuse 40 herum ausgebildet. Der erste Ringkanal 310 bildet die zweite Verteilkammer 220 aus. Beispielsweise ist der Gehäusedeckel 75 so weit radial nach außen hin geführt, dass der Gehäusedeckel 75 sowohl das Gehäuse 285 als auch das Sensorgehäuse 40 verschließt. Die vierte Kanalanordnung 300 mündet in dem ersten Ringkanal 310 und verbindet den Schutzgasanschluss 85 mit dem ersten Ringkanal 310 fluidisch.

Axial auf einer dem Gehäusedeckel 75 abgewandten Seite bilden das Gehäuse 285 und das Sensorgehäuse 40 die Strömungsblende 212 mit der wenigstens einen Blendenöffnung 215 aus. Die Blendenöffnung 215 kann kanalförmig ausgebildet sein. Axial anschließend an die Strömungsblende 215 bilden das Sensorgehäuse 40 und das Gehäuse 285 einen zweiten Ringkanal 325 aus, der radial außenseitig zu dem Sensorgehäuse 40 angeordnet ist. Der zweite Ringkanal 325 kann eine ringförmige Grundform aufweisen. Der zweite Ringkanal 325 formt ferner die erste Verteilkammer 211 aus. Der zweite Ringkanal 325 ist über die Strömungsblende 212 fluidisch mit dem ersten Ringkanal 310 verbunden.

Radial innenseitig ist in dem Sensorgehäuse 40 das Netzgerät 35 auf der zum Gehäusedeckel 75 zugewandten Seite angeordnet. Dabei ist in dem Sensorgehäuse 40 wenigstens eine erste Kanalzuführung 315 angeordnet, die von dem zweiten Ringkanal 325 abzweigt und in dem Gehäuseinnenraum 50, insbesondere im ersten Gehäuseinnenraumabschnitt 298, mündet. Über die erste Kanalzuführung 315 kann das Schutzgas 65 zumindest teilweise in den Gehäuseinnenraum 50, insbesondere den ersten Gehäuseinnenraumabschnitt 298, eingeführt werden, um das Netzgerät 35 im Betrieb des Systems 10 zu kühlen.

Axial versetzt zu der ersten Kanalzuführung 315 ist eine erste Kanalabführung 320 in dem Sensorgehäuse 40 angeordnet. Die erste Kanalabführung 320 mündet radial innenseitig in dem Gehäuseinnenraum 50 des Sensorgehäuses 40, insbesondere in dem ersten Gehäuseinnenraumabschnitt . Die erste Kanalabführung 320 ist in axialer Richtung auf einer zum Gehäusedeckel 75 abgewandten Seite beabstandet zu der ersten Kanalzuführung 315 angeordnet.

In dem zweiten Ringkanal 325 stromabwärtsseitig der ersten Kanalabführung 320 ist eine Beruhigungsstruktur 330 angeordnet. Die Beruhigungsstruktur 330 lenkt vorzugsweise mehrfach das Schutzgas 65 innerhalb des zweiten Ringkanals 325 in Umfangsrichtung um, um die Strömung des Schutzgases 65 zu egalisieren.

Stromabwärtsseitig der fakultativen Beruhigungsstruktur 330, in axialer Richtung auf der zum Gehäusedeckel 75 abgewandten Seite, ist eine zweite Kanalzuführung 335 und axial beabstandet auf der zum Gehäusedeckel 75 abgewandten Seite eine zweite Kanalabführung 340 vorgesehen. Die zweite Kanalzuführung 335 erstreckt sich in radialer Richtung radial nach innen hin durch das Sensorgehäuse 40 und mündet im Gehäuseinnenraum 50 des Sensorgehäuses 40, insbesondere im zweiten Gehäuseinnenraumabschnitt 299 am Sensor 30. Die zweite Kanalabführung 340 ist axial beabstandet vorzugsweise soweit beabstandet, dass zwischen der zweiten Kanalzuführung 335 und der zweiten Kanalabführung 340 der Sensor 30 angeordnet ist. Die zweite Kanalabführung 340 erstreckt sich ebenso durch das Sensorgehäuse 40. Die zweite Kanalabführung 340 mündet im zweiten Gehäuseinnenraumabschnitt 299.

Stromabwärtsseitig der zweiten Kanalabführung 340 ist in dem zweiten Ringkanal 325 eine Rippenstruktur 345 beispielsweise angeordnet, wobei die Rippenstruktur 345 beispielsweise eine Vielzahl von in den zweiten Ringkanal 325 ragenden Rippen 350 aufweisen kann. Die Rippen 350 erstrecken sich parallel zur Achse 55 und dienen zur Ausrichtung des Schutzgases 65 parallel zur Achse 55.

An dem die erste Verteilkammer 211 ausbildenden zweiten Ringkanal 325 sind die erste bis dritte Kanalanordnung 170, 175, 180 auf der dem Gehäusedeckel 75 abgewandten Seite angeordnet.

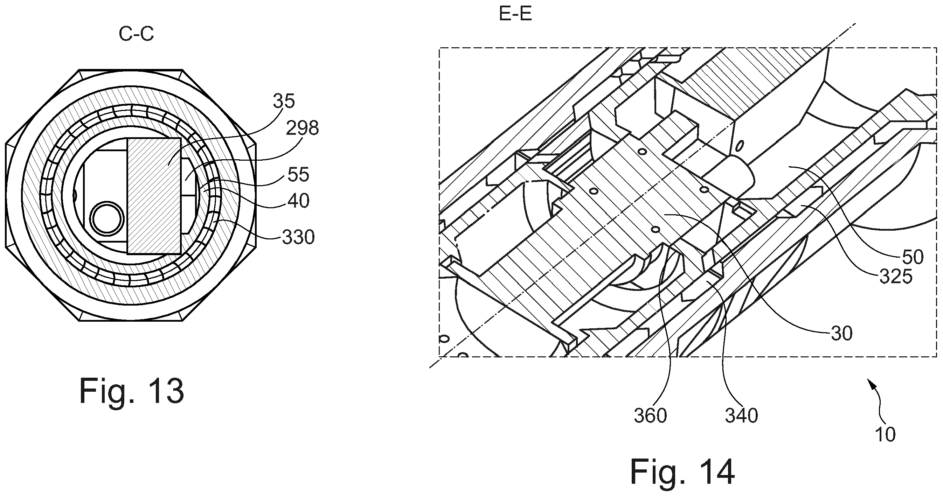

FIG 13 zeigt eine Schnittansicht entlang einer in FIG 12 gezeigten Schnittebene C-C durch das System 10.

In dem ersten Gehäuseinnenraumabschnitt 298 des Sensorgehäuses 40 ist beispielsweise das Netzgerät 35 angeordnet, in dem sowohl die erste Kanalzuführung 315 als auch die erste Kanalabführung 320 münden.

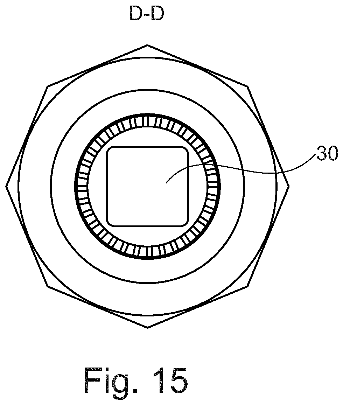

FIG 14 zeigt eine Schnittansicht entlang der in FIG 11 gezeigten Schnittebene E-E durch das System 10, und FIG 15 zeigt eine Schnittansicht entlang einer in FIG 12 gezeigten Schnittebene D-D durch das in FIG 12 gezeigte System 10.

Im Folgenden wird die Funktionsweise des in den FIGN 11 bis 15 gezeigten Systems 10 kurz erläutert.

Das gereinigte Schutzgas 65 wird über den Schutzgasanschluss 85 in das System 10 eingeführt bzw. zugeführt. Das Schutzgas 65 strömt vom Schutzgasanschluss 85 über die vierte Kanalanordnung 300 in den ersten Ringkanal 310, der die zweite Verteilkammer 220 ausbildet. Durch die großvolumige Ausgestaltung aufgrund des großen Außendurchmessers der zweiten Verteilkammer 220 wird die Strömung des Schutzgases 65 in der zweiten Verteilkammer 220 egalisiert und beruhigt.

Aus der zweiten Verteilkammer 220 strömt das Schutzgas 65 über die Strömungsblende 212 radial nach innen hin in den zweiten Ringkanal 325, der die erste Verteilkammer 211 ausbildet. Beispielsweise ein erster Teil des in den zweiten Ringkanal 325 einströmenden Schutzgases 65 strömt über die erste Kanalzuführung 315 in den ersten Gehäuseinnenraumabschnitt 298 und kühlt das Netzgerät 35. Der erwärmte erste Teil des Schutzgases 65 strömt über die erste Kanalabführung 320 zurück radial nach außen in den zweiten Ringkanal 325 und mündet axial versetzt zu der ersten Kanalzuführung 315 in den zweiten Ringkanal 325.

Der in dem zweiten Ringkanal 325 verbleibende zweite Teil des Schutzgases 65 strömt in axialer Richtung von der Strömungsblende 212 in Richtung des Schutzglases 45 und wird beispielsweise mehrfach durch die Beruhigungsstruktur 330 in Umfangsrichtung abgelenkt.

Nach Durchströmen der Beruhigungsstruktur 330 strömt das Schutzgas 65 über die zweite Kanalzuführung 335 radial nach innen in den zweiten Gehäuseinnenraumabschnitt 299 und umströmt den Sensor 30. Dabei kühlt das Schutzgas 65 den Sensor 30. In axialer Richtung strömt das Schutzgas 65 entlang des Sensors 30 in Richtung des Schutzglases 45 und strömt wieder radial nach außen über die zweite Kanalabführung 340 in den zweiten Ringkanal 325.

Das Schutzgas 65 strömt weiter im zweiten Ringkanal 325 zu der Rippenanordnung 345, die das Schutzgas 65 parallel zur Achse 55 ausrichtet. Vom zweiten Ringkanal 325 strömt das Schutzgas 65 nach Durchströmen der Rippenanordnung 345 in die Verteilerkanäle 170, 175, 180 und bildet in dem Schutzraum 135 die im Rahmen der FIGN 1 bis 6 erläuterten Einblaszonen 237, 238 aus.

Die in FIGN 11 bis 15 beschriebene Ausgestaltung des Systems 10 hat den Vorteil, dass das System 10 zusammen mit der Freiblaseinrichtung 20 in radialer Richtung besonders schlank ausgebildet ist. Dadurch ist der Bauraumbedarf für das in den FIGN 11 bis 15 gezeigte System 10 besonders gering.

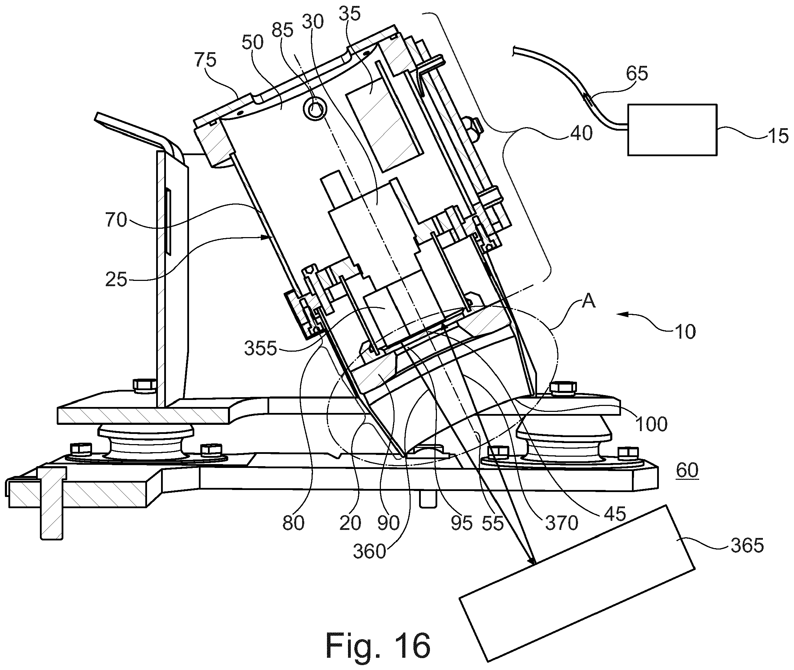

FIG 16 zeigt eine schematische Schnittansicht durch ein System 10 gemäß einer vierten Ausführungsform für eine großindustrielle Anlage.

Das System 10 ist im Wesentlichen identisch zu dem in den FIGN 1 bis 6 erläuterten System 10 ausgebildet. Nachfolgend wird ausschließlich auf die Unterschiede des in FIG 7 gezeigten Systems 10 gemäß der zweiten Ausführungsform gegenüber dem in den FIGN 1 bis 6 gezeigten System 10 gemäß der ersten Ausführungsform eingegangen. Zusätzlich weist das System 10 eine Sendeeinrichtung 355 auf, die ausgebildet ist, eine elektromagnetische Strahlung 360, beispielsweise eine Laserstrahlung, mit vorzugsweise einer Wellenlänge von einschließlich 300nm bis einschließlich 900 nm auszusenden. Die Sendeeinrichtung 355 ist beispielsweise neben dem Sensor 30 angeordnet. Dabei können zwischen dem Sensor 30 und der Sendeeinrichtung 355 Mittel angeordnet sein, um einen direkten Signalweg von der Sendeeinrichtung 355 zu dem Sensor 30 zu unterbinden.

Das Schutzglas 45 ist für die von der Sendeeinrichtung 355 ausgesendete elektromagnetische Strahlung 360 transparent, so dass die elektromagnetische Strahlung 360 über das Schutzglas 45 in den Schutzraum 135 eintritt. Die elektromagnetische Strahlung 360 kann auf eine auszuwertende Komponente 365 der großindustriellen Anlage gerichtet sein. Die großindustrielle Anlage reflektiert die ausgesendete elektromagnetische Strahlung 360 zumindest teilweise in Richtung des Systems 10. Die reflektierte Strahlung 370 tritt über die Ausblasöffnung 100 in den Schutzraum 135 ein. Durch das Schutzgaspolster 236 wird vermieden, dass Partikel direkt an das Schutzglas 45 transportiert werden und sich an dem Schutzglas 45 anlagern können. Durch das Schutzgaspolster 236 wird somit sichergestellt, dass die ausgesendete elektromagnetische Strahlung 360 bestmöglich zur auszuwertenden Komponente 365 der großindustriellen Anlage gelangen kann, und dass die reflektierte Strahlung 365 über das Schutzglas 45 hin zu dem Sensor 30 gelangen kann und der Sensor 30 die reflektierte Strahlung 365 besonders gut erfassen kann.

### Bezugszeichenliste

- 10: System
- 15: Schutzgaseinrichtung
- 20: Freiblaseinrichtung
- 25: Sensoreinrichtung
- 30: Sensor zur Erfassung einer elektromagnetischen Strahlung, insbesondere Pyrometer, optischer Sensor, UV, IR, Laserstrahlung
- 35: Netzgerät
- 40: Sensorgehäuse
- 45: Schutzglas
- 50: Gehäuseinnenraum
- 55: Achse
- 60: partikel- und/oder dampfbeladenen Umgebung
- 65: Schutzgas
- 70: erstes Gehäuseteil
- 75: Gehäusedeckel
- 80: zweites Gehäuseteil
- 85: Schutzgasanschluss
- 90: Strömungsverteiler
- 95: Gehäuseöffnung
- 100: Ausblasöffnung
- 105: erste Innenwand
- 110: erster Wandabschnitt
- 115: zweiter Wandabschnitt
- 120: dritter Wandabschnitt
- 125: Abströmeinheit
- 126: erste äußere Umfangsseite
- 130: zweite Innenwand
- 135: Schutzraum
- 140: erste Düsenanordnung
- 145: zweite Düsenanordnung
- 150: dritte Düsenanordnung
- 155: erste Durchtrittsöffnung
- 160: zweite Durchtrittsöffnung
- 165: dritte Durchtrittsöffnung
- 170: erste Kanalanordnung
- 175: zweite Kanalanordnung
- 180: dritte Kanalanordnung
- 185: erster Verbindungskanal
- 190: erster Kanalabschnitt
- 195: zweiter Verbindungskanal
- 200: zweiter Kanalabschnitt
- 205: dritter Verbindungskanal
- 210: dritter Kanalabschnitt
- 211: erste Verteilkammer
- 212: Strömungsblende
- 215: Blendenöffnung
- 220: zweite Verteilkammer
- 225: Hülse
- 230: Graph
- 235: erster Teil
- 236: Schutzgaspolster
- 237: erste Einblaszone
- 238: zweite Einblaszone
- 240: zweiter Teil
- 245: dritter Teil
- 250: Schnittebene
- 255: erste Verlängerung
- 260: Kreis
- 265: erster Ring
- 270: zweiter Ring
- 275: zweite Verlängerung
- 280: dritte Verlängerung
- 285: Gehäuse
- 290: Adapterring
- 295: zweite äußere Umfangsseite
- 296: Außengewinde
- 297: Innengewinde
- 298: erster Gehäuseinnenraumabschnitt
- 299: zweiter Gehäuseinnenraumabschnitt
- 300: vierte Kanalanordnung
- 305: vierter Verbindungskanal
- 310: erster Ringkanal
- 315: erste Kanalzuführung
- 320: erste Kanalabführung
- 325: zweiter Ringkanal
- 330: Beruhigungsstruktur
- 335: zweite Kanalzuführung
- 340: zweite Kanalabführung
- 345: Ripppenstruktur
- 350: Rippe
- 355: Sendeeinrichtung
- 360: elektromagnetische Strahlung
- 365: auszuwertende Komponente
- 370: reflektierte Strahlung

- b1: maximale erste Erstreckung
- b2: maximale zweite Erstreckung
- h1: erste Höhe
- h2: zweite Höhe
- r: Abstand
- v: Strömungsgeschwindigkeit
- α: erster Wandwinkel
- β: zweiter Wandwinkel
- γ: dritter Wandwinkel
- δ: vierter Wandwinkel
- αK: erster Kanalwinkel
- βK: zweiter Kanalwinkel
- γK: dritter Kanalwinkel

## Patentansprüche

1. Freiblaseinrichtung (20) zum Schutz einer Sensoreinrichtung (25), insbesondere eines Schutzglases (45) der Sensoreinrichtung (25), in einer partikel- und/oder dampfbeladenen Umgebung (60),
- wobei die Freiblaseinrichtung (20) wenigstens einen Strömungsverteiler (90), eine Gehäuseöffnung (95) und eine Ausblasöffnung (100) aufweist,
- wobei sich die Freiblaseinrichtung (20) entlang einer Achse (55) zwischen der Gehäuseöffnung (95) und der zur Gehäuseöffnung (95) gegenüberliegend angeordneten Ausblasöffnung (100) erstreckt,
- wobei zwischen der Gehäuseöffnung (95) und der Ausblasöffnung (100) die Freiblaseinrichtung (20) einen Schutzraum (135) umschließt,
- wobei an der Gehäuseöffnung (95) eine Sensoreinrichtung (25) anordenbar ist und die Ausblasöffnung (100) der staubbeladenen Umgebung (60) zuwendbar ist,
- wobei der Strömungsverteiler (90) wenigstens eine erste Düsenanordnung (140) mit wenigstens einer ersten Durchtrittsöffnung (155), eine erste Innenwand (105) und eine erste Kanalanordnung (170) mit wenigstens einem ersten Verbindungskanal (185) aufweist,
- wobei sich die erste Innenwand (105) von der Gehäuseöffnung (95) in Richtung der Ausblasöffnung (100) erstreckt und umfangsseitig den Schutzraum (135) zumindest abschnittsweise umschließt,
- wobei die erste Düsenanordnung (140) beabstandet zu der Gehäuseöffnung (95) an der ersten Innenwand (105) angeordnet ist,
- wobei der erste Verbindungskanal (185) mit einem ersten Kanalabschnitt (190) an der ersten Durchtrittsöffnung (155) mündet, der schräg geneigt zu der Achse (55) ausgerichtet ist,
- wobei über den ersten Verbindungskanal (185) ein druckbeaufschlagtes Schutzgas (65) zu der ersten Durchtrittsöffnung (155) und von der ersten Durchtrittsöffnung (155) in den Schutzraum (135) führbar ist.

2. Freiblaseinrichtung (20) nach Anspruch 1,
- aufweisend eine Abströmeinheit (125),
- wobei die erste Innenwand (105) ausgehend von der Gehäuseöffnung (95) in Richtung der Ausblasöffnung (100) aufgeweitet ausgeformt ist,
- wobei die Abströmeinheit (125) auf einer der Gehäuseöffnung (95) abgewandten Seite des Strömungsverteilers (90) angeordnet ist, und sich radial außen an die Ausblasöffnung (100) anschließt,
- wobei die Abströmeinheit (125) den Schutzraum (135) mit einer zweiten Innenwand (130) umfangsseitig umschließt,
- wobei die zweite Innenwand (130) ausgehend von dem Strömungsverteiler (90) hin zu der Ausblasöffnung (100) verjüngend ausgeformt ist.

3. Freiblaseinrichtung (20) nach Anspruch 2,
- wobei die zweite Innenwand (130) angrenzend an den Strömungsverteiler (90) eine erste maximale Erstreckung (b1) senkrecht zur Achse (55) aufweist,
- wobei in axialer Richtung bezogen auf die Achse (55) die zweite Innenwand (130) zwischen der Ausblasöffnung (100) und angrenzend an den Strömungsverteiler (90) eine erste Höhe (h1) aufweist,
- wobei ein erstes Verhältnis der ersten Höhe (h1) zu der ersten maximalen Erstreckung (b1) einschließlich 0,5 bis einschließlich 2 beträgt.

4. Freiblaseinrichtung (20) nach Anspruch 2 oder 3,
- wobei die zweite Innenwand (130) angrenzend an den Strömungsverteiler (90) eine erste maximale Erstreckung (b1) senkrecht zur Achse (55) aufweist,
- wobei die zweite Innenwand (130) an der Ausblasöffnung (100) eine zweite maximale Erstreckung (b2) senkrecht zur Achse (55) aufweist,
- wobei ein zweites Verhältnis der zweiten maximalen Erstreckung (b2) zu der ersten maximalen Erstreckung (b1) einschließlich 0,5 bis einschließlich 0,8, insbesondere einschließlich 0,55 bis einschließlich 0,7, beträgt.

5. Freiblaseinrichtung (20) nach einem der vorhergehenden Ansprüche,
- aufweisend eine erste Verteilkammer (211),
- wobei die erste Kanalanordnung (170) mit dem ersten Verbindungskanal (185) auf einer der ersten Durchtrittsöffnung (155) abgewandten Seite in der ersten Verteilkammer (211) mündet,
- wobei über die erste Verteilkammer (211) das Schutzgas (65) zu dem ersten Verbindungskanal (185) führbar ist.

6. Freiblaseinrichtung (20) nach einem der vorhergehenden Ansprüche,
- wobei die erste Düsenanordnung (140) mehrere, vorzugsweise wenigstens einschließlich 10 bis einschließlich 25, insbesondere wenigstens 15 bis einschließlich 25, in Umfangsrichtung um die Achse (55) beabstandet zueinander angeordnete erste Durchtrittsöffnungen (155) aufweist,
- wobei jede der ersten Durchtrittsöffnungen (155) mit jeweils einem zugeordneten ersten Kanalabschnitt (190) des ersten Verbindungskanals (185) fluidisch verbunden ist,
- wobei jeder der ersten Kanalabschnitte (190) in jeweils einem ersten Kanalwinkel (αK) schräg zu der Achse (55) angeordnet ist.

7. Freiblaseinrichtung (20) nach Anspruch 6,
- wobei der Strömungsverteiler (90) eine zweite Düsenanordnung (145) mit wenigstens einer zweiten Durchtrittsöffnung (160) und eine zweite Kanalanordnung (175) mit wenigstens einem zweiten Verbindungskanal (195) aufweist,
- wobei die zweite Düsenanordnung (145) in axialer Richtung bezogen auf die Achse (55) versetzt zu der ersten Düsenanordnung (140) angeordnet ist,
- wobei jeweils der zweite Verbindungskanal (185) jeweils einen zweiten Kanalabschnitt (200) aufweist,
- wobei der zweite Kanalabschnitt (200) an der zweiten Durchtrittsöffnung (160) mündet und in einem zweiten Kanalwinkel (βK) geneigt zu der Achse (55) anschließend an die zweite Durchtrittsöffnung (160) ausgerichtet ist,
- wobei der zweite Kanalwinkel (βK) unterschiedlich, insbesondere kleiner, als der erste Kanalwinkel (αK) ist.

8. Freiblaseinrichtung (20) nach Anspruch 7,
- wobei die zweite Düsenanordnung (145) mehrere, vorzugsweise wenigstens einschließlich 10 bis einschließlich 25, insbesondere wenigstens einschließlich15 bis einschließlich 25, in Umfangsrichtung um die Achse (55) beabstandet zueinander angeordnete zweite Durchtrittsöffnungen (160) aufweist,
- wobei jede der zweiten Durchtrittsöffnungen (160) mit jeweils dem einen zweiten Kanalabschnitt (200) fluidisch verbunden ist.

9. Freiblaseinrichtung (20) nach Anspruch 6 oder 7,
- wobei die erste Durchtrittsöffnung (155) jeweils eine erste Austrittsfläche aufweist,
- wobei der erste Kanalabschnitt (190) beabstandet zu der ersten Durchtrittsöffnung (155) jeweils eine erste Kanalquerschnittsfläche aufweist,
- wobei die zweite Durchtrittsöffnung (160) jeweils eine zweite Austrittsfläche aufweist,
- wobei der zweite Kanalabschnitt (200) beabstandet zu der zweiten Durchtrittsöffnung (160) jeweils eine zweite Kanalquerschnittsfläche aufweist,
- wobei ein drittes Verhältnis einer ersten Summenquerschnittsfläche gebildet aus einer ersten Summe der ersten und zweiten Austrittsflächen zu einer zweiten Summenquerschnittsfläche gebildet aus einer zweiten Summe der ersten und zweiten Kanalquerschnittsflächen einschließlich 0,1 bis einschließlich 0,6, insbesondere einschließlich 0,2 bis einschließlich 0,5, beträgt.

10. Freiblaseinrichtung (20) nach einem der Ansprüche 6 bis 8,
- wobei die erste Durchtrittsöffnung (155) jeweils eine erste Austrittsfläche aufweist,
- wobei die zweite Durchtrittsöffnung (160) jeweils eine zweite Austrittsfläche aufweist,
- wobei ein viertes Verhältnis aus einer dritten Summenquerschnittsfläche gebildet aus einer dritten Summe der ersten Austrittsflächen zu einer vierten Summenquerschnittsfläche gebildet aus einer vierten Summe aller Austrittsflächen der Durchtrittsöffnungen (155, 160, 165) einschließlich 0,2 bis einschließlich 0,5, insbesondere einschließlich 0,25 bis einschließlich 0,45, beträgt.

11. Freiblaseinrichtung (20) nach einem der vorhergehenden Ansprüche,
- wobei die erste Innenwand (105) einen ersten Wandabschnitt (110) aufweist,
- wobei der erste Wandabschnitt (110) konusförmig ausgeformt ist,
- wobei der erste Wandabschnitt (110) zu der Achse (55) einen ersten Wandwinkel (α) einschließt,
- wobei der erste Wandwinkel (α) vorzugsweise einschließlich **40°** bis einschließlich **70°** beträgt.

12. Freiblaseinrichtung (20) nach Anspruch 9,
- wobei die erste Innenwand (105) einen zweiten Wandabschnitt (115) aufweist,
- wobei der zweite Wandabschnitt (115) konusförmig ausgeformt ist,
- wobei der zweite Wandabschnitt (115) zu der Achse (55) einen zweiten Wandwinkel (β) einschließt,
- wobei der zweite Wandwinkel (β) größer als der erste Wandwinkel (α) und kleiner 90° ist,
- wobei vorzugsweise der zweite Wandabschnitt (115) radial außenseitig zu dem ersten Wandabschnitt (110) angeordnet ist.

13. System (10)
- mit einer Sensoreinrichtung (25), einer Schutzgaseinrichtung (15) und einer Freiblaseinrichtung (20) nach einem der vorhergehenden Ansprüche,
- wobei die Sensoreinrichtung (25) einen Sensor (30), ein Sensorgehäuse (40) und ein Schutzglas (45) aufweist,
- wobei das Sensorgehäuse (40) einen Gehäuseinnenraum (50) umschließt, in dem der Sensor (30) angeordnet ist,
- wobei das Schutzglas (45) an der Gehäuseöffnung (95) angeordnet ist und den Gehäuseinnenraum (50) verschließt,
- wobei die Schutzgaseinrichtung (15) fluidisch mit der Freiblaseinrichtung (20) verbunden und ausgebildet ist, das druckbeaufschlagte Schutzgas (65) bereitzustellen.

14. Verfahren zum Betrieb einer Freiblaseinrichtung (20) nach einem der Ansprüche 1 bis 12,
- wobei über den ersten Verbindungskanal (185) ein druckbeaufschlagtes Schutzgas (65) zu der ersten Düsenanordnung (140) geführt wird,
- wobei das Schutzgas (65) durch den ersten Kanalabschnitt (190) ausgerichtet wird und ausgerichtet über die erste Durchtrittsöffnung (155) in den Schutzraum (135) geführt wird,
- wobei das Schutzgas (65) in Richtung der Ausblasöffnung (100) in dem Schutzraum (135) strömt und an der Gehäuseöffnung (95) ein Schutzgaspolster (236) ausbildet,
- wobei das Schutzgas (65) an der Ausblasöffnung (100) aus dem Schutzraum (135) austritt,
- wobei vorzugsweise das Schutzgas (65) über die Ausblasöffnung (100) eintretende Partikel aus dem Schutzraum (135) führt und/oder einen Eintritt von Partikeln über die Ausblasöffnung (100) in den Schutzraum (135) reduziert.

15. Verfahren nach Anspruch 14,
- wobei das Schutzgas (65) mit einer Reynoldszahl von kleiner 16.000 in dem Schutzraum (135) von der ersten Düsenanordnung (140) in Richtung der Ausblasöffnung (100) strömt,
- wobei vorzugsweise ein bezüglich Austrittsöffnung relatives Volumen von im Wesentlichen einschließlich 0,04 l/min/mm² bis 0,4 l/min/mm² von Schutzgas (65) in den Schutzraum (135) geführt wird,
- wobei vorzugsweise das Schutzgas (65) mit einem Überdruck gegenüber einer Umgebung (60) von einschließlich 0,5 bar bis einschließlich 1,5 bar, insbesondere einschließlich 0,7 bar bis einschließlich 1,0 bar, zugeführt wird.
